(19) Europäisches Patentamt
European Patent Office
Office européen des brevets

(11) **EP 4 672 694 A1**

(12) **EUROPEAN PATENT APPLICATION**

(43) Date of publication:
**31.12.2025 Bulletin 2026/01**

(21) Application number: **25174202.9**

(22) Date of filing: **05.05.2025**

(51) International Patent Classification (IPC):
**H04L 41/0806** *(2022.01)* **H04L 41/0823** *(2022.01)*
**H04L 41/085** *(2022.01)* **H04L 41/16** *(2022.01)*
H04L 41/0604 *(2022.01)* H04L 41/08 *(2022.01)*
H04L 41/14 *(2022.01)* H04L 41/026 *(2022.01)*

(52) Cooperative Patent Classification (CPC):
**H04L 41/16; H04L 41/0895;** H04L 41/085;
H04L 41/0894

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **27.06.2024 US 202418757138**

(71) Applicant: **Intel Corporation
Santa Clara, CA 95054 (US)**

(72) Inventors:
• **CONNOR, Patrick L.
Beaverton, 97007 (US)**
• **CARRANZA, Marcos Emanuel
Portland, 97229 (US)**
• **MARTINEZ-SPESSOT, Cesar Ignacio
Hillsboro, 97123 (US)**
• **GUZMAN, Mateo
Beaverton, 97078 (US)**
• **ORTEGA DE MUES, Mariano
Hillsboro, 97124 (US)**

(74) Representative: **Maiwald GmbH
Elisenhof
Elisenstraße 3
80335 München (DE)**

(54) **METHODS AND APPARATUS TO MANAGE CONFIGURATION ASSETS FOR NETWORK DEVICES**

(57) Methods, apparatus, systems, and articles of manufacture to manage configuration assets for network devices are disclosed. Example instructions cause at least one programmable circuit to generate network infrastructure instructions using a model, the network infrastructure instructions based on a configuration request and on a network infrastructure; and deploy a program corresponding to the network infrastructure instructions to at least one device in the network infrastructure.

FIG. 3

EP 4 672 694 A1

**Description**

BACKGROUND

In recent years, artificial intelligence (e.g., machine learning, deep learning, etc.) has increased in popularity. Artificial intelligence may be implemented using neural networks. Neural networks are computing systems inspired by the neural networks of human brains. A neural network can receive an input and generate an output. The neural network includes layers of neurons corresponding to weights that can be trained (e.g., can learn, be weighted, etc.) so that the output corresponds to a desired result. Once trained, the neural network can make decisions to generate an output based on an input. Neural networks are used for the emerging fields of artificial intelligence and/or machine learning. A large language model (LLM) is a type of artificial neural network with the ability to perform general-purpose language generation and other natural language processing tasks. An LLM can generate text, predict a subsequent text based on input text, etc.

BRIEF DESCRIPTION OF THE DRAWINGS

FIG. 1 is an example environment including infrastructure processing unit (IPU) management circuitry instantiated in accordance with the examples of the disclosure to manage configuration assets for network devices.

FIG. 2 is a block diagram of an example implementation of the IPU knowledge generation circuitry of FIG. 1.

FIG. 3 is a block diagram of an example implementation of the configuration assets generation circuitry of FIG. 1.

FIG. 4 is a block diagram of an additional and/or alternative example implementation of the configuration assets generation circuitry of FIG. 1.

FIG. 5 is a flowchart representative of example machine-readable instructions and/or operations that may be executed, instantiated, and/or performed by programmable circuitry to implement the IPU knowledge generation circuitry of FIG. 2.

FIG. 6 is a flowchart representative of example machine-readable instructions and/or operations that may be executed, instantiated, and/or performed by programmable circuitry to implement the IPU knowledge generation circuitry of FIG. 3.

FIG. 7 is a flowchart representative of example machine-readable instructions and/or operations that may be executed, instantiated, and/or performed by programmable circuitry to implement the IPU knowledge generation circuitry of FIG. 4.

FIG. 8 is a block diagram of an example processor platform including programmable circuitry structured to execute, instantiate, and/or perform the computer readable instructions and/or perform the example operations of FIGS. 5-7 to implement at least one of the IPU knowledge generation circuitry and/or the configuration assets generation circuitry of FIGS. 1-4.

FIG. 9 is a block diagram of an example implementation of the programmable circuitry of FIG. 8.

FIG. 10 is a block diagram of another example implementation of the programmable circuitry of FIG. 8.

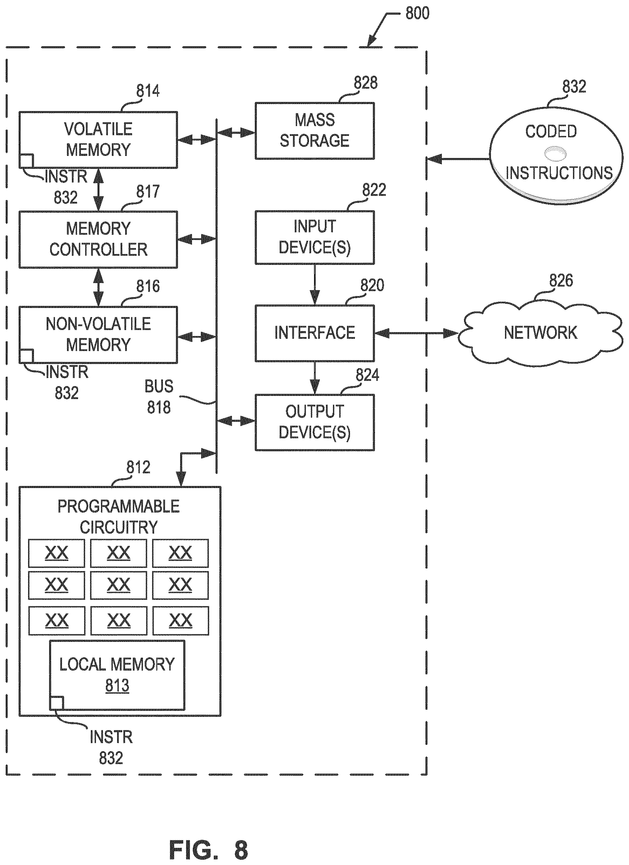

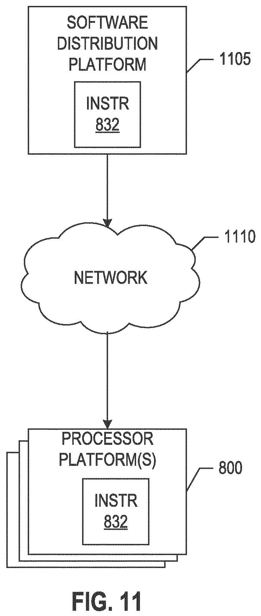

FIG. 11 is a block diagram of an example software/firmware/instructions distribution platform (e.g., one or more servers) to distribute software, instructions, and/or firmware (e.g., corresponding to the example machine-readable instructions of FIG. 8) to client devices associated with end users and/or consumers (e.g., for license, sale, and/or use), retailers (e.g., for sale, re-sale, license, and/or sub-license), and/or original equipment manufacturers (OEMs) (e.g., for inclusion in products to be distributed to, for example, retailers and/or to other end users such as direct buy customers).

In general, the same reference numbers will be used throughout the drawing(s) and accompanying written description to refer to the same or like parts. The figures are not necessarily to scale.

DETAILED DESCRIPTION

Some network architectures include a plurality of networking devices (e.g., infrastructure processing units (IPUs), smart network interface controller (smartNIC) devices, etc.) that perform different tasks. The plurality of networking devices provides an ability to define a virtual communications network infrastructure. A user and/or entity can define the virtual communication network infrastructure by managing the configuration(s) of the network devices.

Execution profiles need to be configured to provide the network functions to network device equipment. Whether the network devices function as virtual switches, firewall, or routers, the definitions of the functions and the mapping between the physical capabilities (e.g., Ethernet ports) of the network elements and the virtual elements (e.g., virtual ports) of the network elements can be a challenging task. Whether the execution profiles are implemented using low-level rules dependent on proprietary hardware or applications developed in high-level open-source languages, such as P4, network programming language (NPL), python, Julia, Scala (e.g., with Apache Spark), Go, Erlang/Elixir, Rust, Hadoop, message passage interface (MPI), etc. the final performance of these configurations and the defined information flows of a device in a configuration may not be accurately established. Only after deployment and commissioning of network infrastructure can a human operator decide whether the performance is sufficient and whether the information flows are correct. Network device infrastructure and configuration may be deployed based on a theoretical design. However, after deployment, the functionality of the network devices in the network infrastructure can be different than the intended design.

After deployment and commissioning of network infrastructure, third-party operations systems can detect problems or a drop in service quality throughout the infrastructure. If a problem or drop in service quality is detected, a new execution profile should be defined, validated, and deployed. However, such an after-event approach is becoming a less and less viable option as the massive deployment of IPU devices throughout the Edge-Cloud. To manage an efficient network, the reconfiguration needs should not be based only on general profiles (sets of rules or defined fixed flows). To increase efficiency, articulation of one or several mechanisms that can suggest and (depending on the degree of autonomy allowed) apply dynamic configurations based on the behavior of the IPUs already deployed may be desirable.

Examples disclosed herein utilize AI techniques to software-defined networking (SDN) techniques including performing dynamic analysis of the current configuration state of a network infrastructure (static configurations such as node policies, dynamic rule groups like flexible packet processor (FXP) rules, and deployed P4 applications/packages) and identified events of their behavior through telemetry. As used herein node policies, FXP, P4 applications, NPL applications, Python applications, Julia applications, Scala (e.g., with Apache Spark) applications, Go applications, Erlang/Elixir applications, Rust applications, Hadoop applications, MPI applications, etc. are herein referred to as network infrastructure instructions, configuration instructions, configuration assets, configuration elements, configuration components, configuration rules, networking components, networking elements, networking assets, and/or networking rules. The configuration assets, when deployed to one or more network devices in a network, adjust behavior of the one or more network devices (e.g., by changing how packets is processed, changing how packets are routed, adjust firewall settings, adjust switch settings, starting one or more operations, stopping one or more operations, etc.). Configuration assets may include programmable parsing features, rich classification features (e.g., including multiple chained exact-match and wildcard classifiers with external memory backing), high-scale metering and counting, generic programmable packet editing, multi-pass recirculation model(s), mirroring and replication capabilities, etc. Examples disclosed herein automatically generate groups of network devices using one or more clustering techniques that allow joint management of equipment both with similar initial characteristics (e.g., number of virtual ports, number of downlinks, number of uplinks, buffer sizes, etc.) and with deployment differences (e.g., supported subnets, isolation policies, forwarding rules, etc.). Examples disclosed herein generate functionality tags (e.g., router, firewall, switch, etc.) for the different groups that correspond to the functional and/or operation of the network devices in a group. The inferred functional tags enable examples disclosed herein to group the firmware and software. Additionally, the functional tags enrich the vocabulary associated with inputs from a user. For example, functional tags allow filtering based on text-based input (also referred to as a prompt), such as "I need FXP rules to deploy in an IPU that will work as an intranet firewall" or "This new IPU will act as a hub with high-volume traffic." As new devices are included in the network and new configuration are provided, the cluster can evolve, dividing the previous clusters into cluster specializations (e.g., an extranet firewall vs an intranet firewall, large volume router vs medium/small volume router, etc.).

After the network devices are grouped and tagged with functionality tags, examples disclosed herein determine a fitness risk index value for the configuration state. The fitness index may be used to label the firmware and software components deployed in the network devices. The fitness risk index establishes the correctness of the network device actions with respect to the deployment environment and the requirements of the deployed environment. Additionally, examples disclosed herein determine an error index value associated with the configuration state of the network devices. The error index may also be used to label the firmware and software components deployed in the network devices. The error index establishes errors that have occurred within the network devices. The fitness risk index value and the error index value are stored in knowledge database and can be used to configure future network device infrastructure.

In some examples disclosed herein automatically generate code for implementing configuration assets (e.g., node policies, FXP rules, PF packages, etc.) that satisfy a function for which new equipment is deployed in a network. Examples disclosed herein can train multiple LLM code models (e.g., one for node policies, one for FXP, one for P4 packages, etc.) using fine-tuning over a code-oriented model. Also, examples disclosed herein can perform continuous reinforcement of the quality of the code generation components with a retrieval augmented architecture (RAG) based on the dynamically generated knowledge database. Additionally, examples disclosed herein can automatically generate reconfiguration recommendations for firmware/software elements in a network using an AI-based model and the knowledge database.

After examples disclosed herein generate configuration assets, examples disclosed herein deploy and/or scale the configuration assets to one or more network devices in one or more clusters. Examples disclosed herein can statically analyze configuration assets for correctness and/or completeness. A small subset may be used from previously identified clusters to exercise assets (e.g., including non-final test such as performance test) to confirm and make new components available for a target cluster. Although examples described herein are described in conjunction with IPUs, the disclosed examples can be implemented with respect for other types of processing units, such as data processing units (DPUs), edge processing units (EPUs), etc.

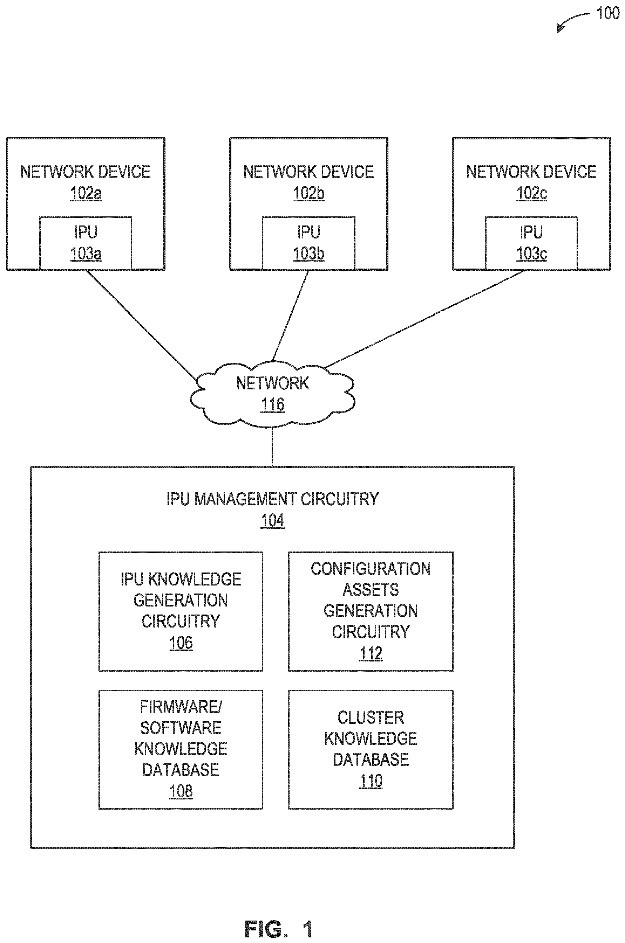

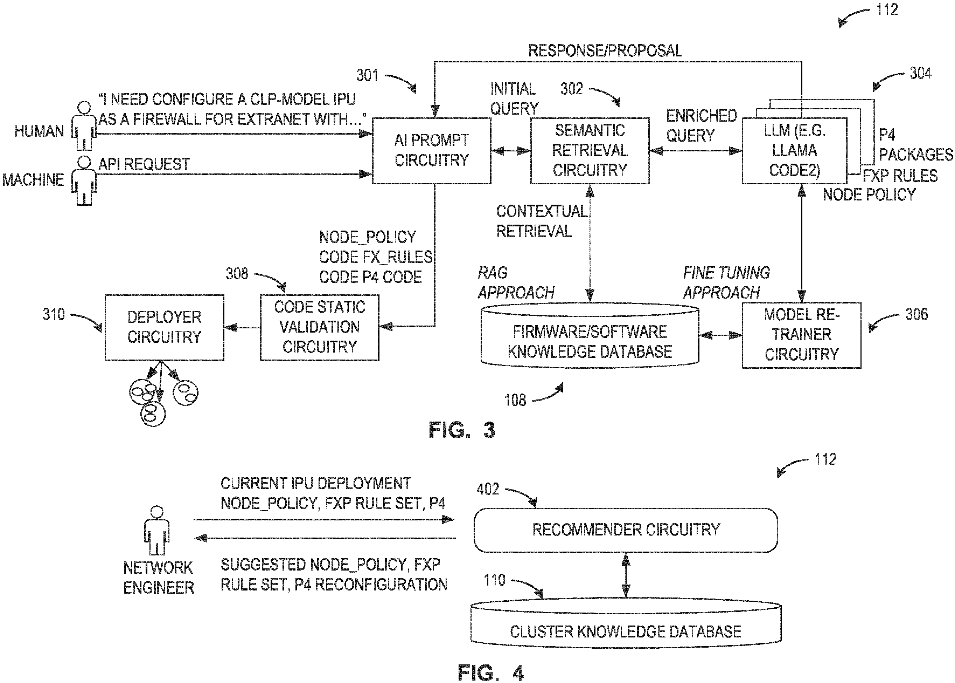

FIG. 1 is an example environment 100 that includes example network devices 102a-102c including corresponding IPUs 103a-103c. FIG. 1 further includes example IPU management circuitry 104 constructed in accordance with the examples of this disclosure. The example IPU management circuitry 104 of FIG. 4 includes example IPU knowledge generation circuitry 106, an example firmware/software knowledge database 108, an example cluster knowledge database 110, and example configuration assets generation circuitry 112. The environment of FIG. 1 further includes an example network 116.

The network devices 102a-102c of this example are devices in that implement IPUs in the network infrastructure. The network devices 102a-102c can work independently and/or together to execute network functions using the corresponding IPUs 103a-103c. Although the network devices 102a-102c implement the IPUs 103a-103c, the network devices 102a-102c could implement any type(s) and/or number of processing devices (e.g., central processing units, graphical processing units, data processing units (DPUs), edge processing units (EPUs), etc.). The IPUs 103a-103c can implement different functions. In some examples, the IPUs 103a-103c execute network functions based on execution profiles developed by the IPU management circuitry 104. The IPUs 103a-103c can respectively implement and/or function as any one or more of a virtual switch, a firewall, a router, etc. As further described below, the IPU management circuitry 104 can map the physical capabilities of the network devices 102a-102c and the virtual elements and/or determine how to adjust the configuration assets of the IPUS 103a-103c to increase efficiency, conform to one or more service level agreements (SLAs) and/or service level objectives (SLOs), and/or increase performance of the IPUs 103a-103c.

The IPU management circuitry 104 of FIG. 1 performs software-defined networking (SDN) techniques to manage the network devices 102a-102c. For example, the IPU management circuitry 104 can gather telemetry data related to the operation of the network devices 102a-102c to build a knowledge database that can be used to leverage a machine learning model to generate configuration assets for the network infrastructure and/or other networks of network devices. Additionally, the IPU management circuitry 104 can use the knowledge databases to generate configuration elements for new networks and/or recommend updated configuration elements for already deployed networks.

The IPU knowledge generation circuitry 106 of FIG. 1 obtains data related to IPUs 103a-103c via the network 116. The data may include theoretical functionality (e.g., functionality designed for an IPU before being implemented), deployed configuration assets, and/or device behavior in the form of telemetry data. The IPU knowledge generation circuitry 106 uses the obtained data to generate knowledge data to be stored in the firmware/software knowledge database 108 and/or the cluster knowledge database 110 of FIG. 1. The IPU knowledge generation circuitry 106 groups and/or clusters the IPUs 103-103c based on their functionality. For example, if the IPUs 103a, 103b are operating as switches and the IPU 103c is operating as a router, the IPU knowledge generation circuitry 106 generates a first group including the IPUs 103a, 103b and tags the group with a functionality tag corresponding to switch operation. Additionally, the IPU knowledge generation circuitry 106 generates a second group including the IPU 103c and tags the group with a functionality tag corresponding to the router operation. The functionality of the IPUs 103a-103c is provided to the IPU knowledge generation circuitry 106 via the network 116. The IPU knowledge generation circuitry 106 may additionally obtain information related to one or more IPUs of different networks to generate firmware/software knowledge and/or cluster knowledge from a plurality of different network setups.

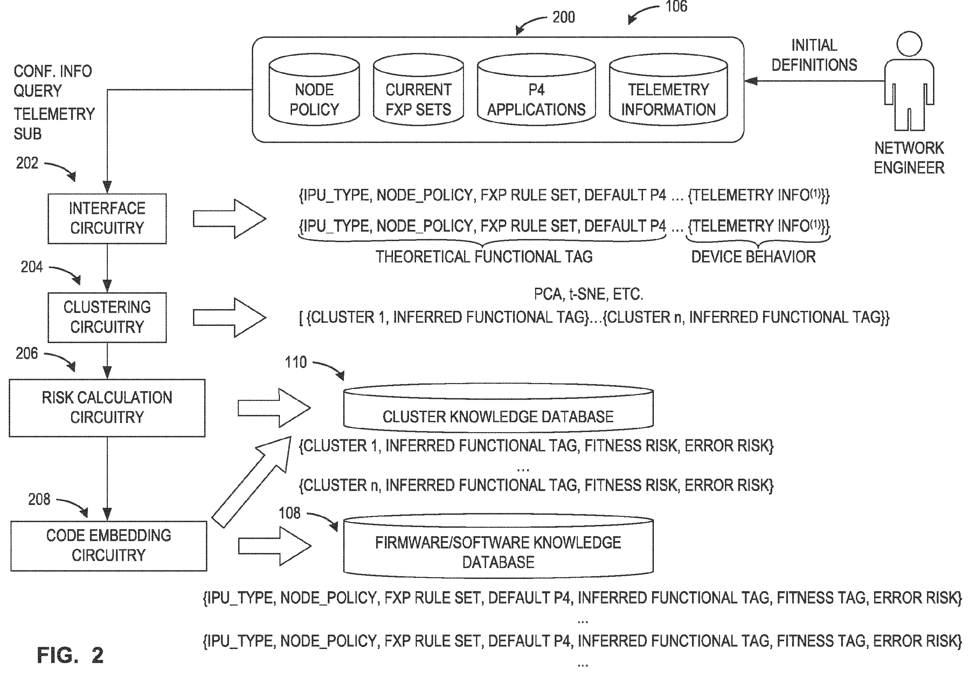

After the groups are generated and tagged, the IPU knowledge generation circuitry 106 of FIG. 1 determines a first metric and a second metric related to the state of the IPUs 103a-103c. The first metric may be a fitness risk index corresponding to the configuration state at a given moment of the IPUs 103a-103c. The fitness risk index corresponds to the correctness of the IPU actions with respect to the deployment environment and its requirements in a real operating situation. The second metric may be an error index corresponding to the configuration state at a given time. The error index corresponds to errors that have occurred in the current IPU network configuration (e.g., packet loss, retransmission, increased latency due to lack of resources, etc.). For each cluster, the IPU knowledge generation circuitry 106 generates an entry in the firmware/software knowledge database 108 including the configuration asset(s) implemented by the IPUs in the cluster (e.g., IPU type, node policy, FXP rule set, default P4, etc.), the functional tag, the fitness risk index, and the error index. Additionally or alternatively, for each cluster, the IPU knowledge generation circuitry 106 generates an entry in the cluster knowledge database 110 including a cluster identifier, the functional tag, the fitness risk index, and the error index. The IPU knowledge generation circuitry 106 is further described below in conjunction with FIG. 2.

The firmware/software knowledge database 108 of FIG. 1 stores vectors for each identified cluster in the network infrastructure and/or any other network that has been analyzed by the IPU knowledge generation circuitry 106. As described above, each vector corresponds to an identified cluster and includes configuration assets(s) implemented by the IPUs in the cluster, the functional tag of the cluster, the fitness risk index, and the error index. The configuration asset(s) may be the initial configuration asset(s) set by an administrator and/or configuration asset(s) based on a current state of the IPUs 103a-103c. As further described below, the configuration assets generation circuitry 112 utilizes the firmware/software knowledge database 108 to leverage a text-based prompt from a user to generate configuration assets to be deployed to a network device (e.g., a new network device in a new network).

The cluster knowledge database 110 of FIG. 1 stores vectors for each identified cluster in the network infrastructure and/or any other network that has been analyzed by the IPU knowledge generation circuitry 106. As described above, each vector corresponds to an identified cluster and includes a cluster identifier, the functional tag of the cluster, the fitness risk index, and the error index. As further described below, the configuration assets generation circuitry 112 utilizes the cluster knowledge database 110 to generate configuration assets recommendations to a user.

The configuration assets generation circuitry 112 of FIG. 1 utilizes an AI-based model (e.g., an LLM) to generate configuration assets for network devices based on a prompt from a user. For example, a user may generate a prompt that states "I need FXP rules to deploy in an IPU that will work as an intranet firewall." The configuration assets generation circuitry 112 leverages the firmware/software knowledge database 108 to add context information to the initial prompt from the user to generate an enriched prompt. In this manner, instead applying a prompt (which may be large and/or complicated) to the AI-based model, the configuration assets generation circuitry 112 queries the AI-based model with enriched information from previous deployments that is more optimally suited to generate an output. The configuration assets generation circuitry 112 applies the enriched prompt to the AI-based model to generate configuration assets based on the enriched prompt. In some examples, the configuration assets generation circuitry 112 considers one or more SLAs and/or SLOs when generating the configuration assets. The configuration assets generation circuitry 112 deploys a program (e.g., an executable) including code corresponding to the configuration assets to one or more IPUs within a network. In some examples, the configuration assets generation circuitry 112 can test the generated configuration assets in a virtual environment before deploying to an IPU. In some examples, the configuration assets generation circuitry 112 outputs the generated configuration assets to a user for approval.

Additionally, the configuration assets generation circuitry 112 of FIG. 1 implements a second AI-based model that can utilize data in the cluster knowledge database 110 to generate recommended configuration asset updates to a user and/or automatically deploy a program (e.g., an executable) including code corresponding to the recommended configuration asset updates. For example, the configuration assets generation circuitry 112 can apply (a) current IPU deployment configuration assets to computing devices in a network and/or telemetry data from the computing devices in the network and/or (b) information in the cluster knowledge database 110 to generate a recommendation and/or suggestion for different configuration assets for one or more of the computing devices to operate more efficiently and/or effectively. The configuration assets generation circuitry 112 is further described below in conjunction with FIGS. 3 and/or 4.

The example network 116 of FIG. 1 is a system of interconnected systems exchanging data. The example network 116 may be implemented using any type of public or private network such as, but not limited to, the Internet, a telephone network, a cellular network, a local area network (LAN), a wide area network (WAN), mobile broadband, a cable network, and/or a wireless network. To enable communication via the network 116, the example computing devices 102a-102c and/or the IPU management circuitry 104 may include a communication interface that enables a connection to an Ethernet, a digital subscriber line (DSL), Fiber Optic connections, Satellite Internet, a telephone line, a coaxial cable, or any wireless connection, etc. In some examples, the example computing devices 102a-102c and/or the IPU management circuitry 104 are connected via the example network 116.

Although the IPU management circuitry 104 implements the IPU knowledge generation circuitry 106, the databases 108, 110 and configuration assets generation circuitry 112. The components of the IPU management circuitry 104 may be implemented in one or more separate devices. For example, the IPU knowledge generation circuitry 106 may be implemented in a first device that manages a first network of IPUs. The IPU knowledge generation circuitry 106 can output generated vectors to a second device that includes the databases 108, 110 (e.g., via a network communication) for storage. Additionally, the configuration assets generation circuitry 112 can be implemented in a third device that manages a second network of IPUs. The configuration assets generation circuitry 112 can access the data in the databases 108, 110 via a network communication to generate configuration assets for the second network of IPUs.

FIG. 2 is a block diagram of an example implementation of the IPU knowledge generation circuitry 106 of FIG. 1 to generate vectors for storage in the firmware/software knowledge database 108 and/or the cluster knowledge database 110 based on a monitored network of IPUs. The IPU knowledge generation circuitry 106 of FIG. 2 may be instantiated (e.g., creating an instance of, bring into being for any length of time, materialize, implement, etc.) by programmable circuitry such as a Central Processor Unit (CPU) executing first instructions. Additionally or alternatively, the IPU knowledge generation circuitry 106 of FIG. 2 may be instantiated (e.g., creating an instance of, bring into being for any length of time, materialize, implement, etc.) by (i) an Application Specific Integrated Circuit (ASIC), CPU (Central Processing Units), GPU (Graphics Processing Units), Neuromorphic Processing Unit, TPU (Tensor Processing Unit), Matrix Math Accelerator, and/or (ii) a Field Programmable Gate Array (FPGA) structured and/or an SoCs (System on Chip) comprising any of these and/or configured in response to execution of second instructions to perform operations corresponding to the first instructions. It should be understood that some or all of the circuitry of FIG. 2 may, thus, be instantiated at the same or different times. Some or all of the circuitry of FIG. 2 may be instantiated, for example, in one or more threads executing concurrently on hardware and/or in series on hardware. Moreover, in some examples, some or all of the circuitry of FIG. 2 may be implemented by microprocessor circuitry executing instructions and/or FPGA circuitry performing operations to implement one or more virtual machines and/or containers. The IPU knowledge generation circuitry 106 of FIG. 2 includes an example monitored network information database 200, example interface circuitry 202, example clustering circuitry 204, example risk calculation circuitry 206, and example code embedding circuitry 208. FIG. 2 further includes the example firmware/software knowledge database 108 and the example cluster knowledge database 110 of FIG. 1.

The monitored network information database 200 of FIG. 2 includes one or more storage devices to store the initial theoretical functions (e.g., the IPU type corresponding to operation as a firewall, a switch, a router, etc.) and/or configuration assets (e.g., the node policies, the FXP rule set, the P4 application/packages, etc.) that are initially defined and/or deployed to the IPUs in a network. After the configuration assets are deployed to the IPUs and operation begins, the IPUs transmit telemetry data (e.g., periodically, aperiodically, and/or based on a trigger) that is stored in the network information database 200.

The interface circuitry 202 of FIG. 2 accesses the information in the network information database 200 to initiate the generation of a vector to be stored in the firmware/software knowledge database 108 and/or the cluster knowledge database 110. For example, the interface circuitry 202 collects initial IPU configuration data using one or more ingestion techniques. In some examples, the interface circuitry 202 integrates different data sources and formats, groups the data, and prepares the grouped data for the application of clustering algorithms performed by the clustering circuitry 204.

The clustering circuitry 204 of FIG. 2 generates groups and/or clusters of IPUs in a network based on the inferred functionality of the IPUs. When IPUs are first deployed, a user and/or network engineer will set up initial IPU configurations including initial functionalities (e.g., switch, router, firewall, etc.) of the IPUs. However, after the initialization the IPUs may perform different functionalities than what was initially defined by the user. Accordingly, the clustering circuitry 204 can perform one or more algorithms (e.g., a k-means clustering algorithm, a hierarchical clustering algorithm, etc.) to determine the actual functionalities of the IPUs in the network and group and or cluster IPUs based on the functionalities (e.g., a first group of IPUs operating as switches, a second group of IPUs operating as routers, etc.). Additionally, the clustering circuitry 204 applies functional labels to the clusters based on the determined functionalities of the IPUs in a cluster. The functionality labels are inherent by the configuration assets of the IPUs in a cluster. In some examples (e.g., initially or after new IPUs are added to a network), the clustering circuitry 204 can evolve the clusters by dividing previous clusters into cluster specializations. For example, the clustering circuitry 204 can divide (a) a switch cluster into small switches, medium switches, or large switches, (b) a router into small/medium router or large router, and/or (c) a firewall into an extranet firewall or an intranet firewall.

The risk calculation circuitry 206 of FIG. 2 determines a first value and a second value corresponding to the configuration and/or operation of the IPUs in the cluster. The first value is a fitness risk index. The risk calculation circuitry 206 utilizes telemetry data to determine a distance between the capacity and function required after deployment and the capabilities deployed/configured in each cluster in the network. For example, one configuration establishes the segmentation of a physical channel or port of a given capacity of 100 Gb into four different channels of 25 Gb, assigning the use of the first two channels for communicating with a given network. In such an example, if the telemetry data indicates saturation of the two assigned channels, the fitness risk index will result in a low fitness configuration. Thus, the fitness risk index measures the adequacy of the initial configuration assets after deployment. In some examples, the fitness risk index may be based on the below Equation 1.

$$FRI = 1 - (Wc * C + Wl * L + Wp * P + Wr * R) \quad (Equation\ 1)$$

In the above-Equation 1, FRI is the fitness risk index. C is the Channel Utilization Factor corresponding to how efficiently the network channels are being utilized (e.g., a value near 1 corresponding to channels being used effectively, without over or underutilization; a value near 0 corresponding to the channels being either congested or underused). L is the Latency Factor (e.g., the average latency across the network; where a value near 1 corresponds to low latency and a value near 0 corresponds to high latency). P is the Packet Loss Factor (e.g., rate of packet loss in the network; where a value near 1 corresponds to a low packet loss rate and a value near 0 corresponds to a high packet loss rate). R is the Resource Allocation Factor (e.g., corresponding to how well the IPU resources are allocated to meet the network demands; where a value near 1 corresponding to resources being allocated in a way that meets or exceeds the requirements and a value near 0 corresponding to a poor resource allocation, leading to potential performance bottlenecks). Wc, Wl, Wp, Wr are the weights assigned to each factor, reflecting their relative importance in the overall fitness of the configuration. The weights may be determined based on the specific network's priorities and requirements and/or administrator preferences.

The second value generated by the risk calculation circuitry 206 is an error index. The risk calculation circuitry 206 typifies the reliability of each IPU in the network with the currently deployed configuration assets by generating the error index. The risk calculation circuitry 206 generates the error index based on the latency, packet loss, retransmission rate, noise levels, etc. of the IPUs in each cluster. For example, some configurations deployed at a given time may become inefficient by causing high packet lass, increased retransmissions, or increased latency due to lack of resources. The risk calculation circuitry 206 would generate a low error index for such configurations. Modifications to static configurations and/or to configuration assets can improve the low error index. In some examples, the fitness risk index may be based on the below Equation 2.

$$ERI = 1 - (We * E + Wt * T + Wb * B + Wd * D) \text{ (Equation 2)}$$

In the above-Equation 2, ERI is the error index. E is the Error Rate Factor corresponding to the frequency of errors occurring in the network (e.g., a value near 1 corresponding to infrequent errors). T is the Throughput Factor corresponding to data rate that the network can handle (e.g., where a value near 0 corresponding to lower network throughput than its potential). B is the Bandwidth Efficiency Factor corresponding to how efficiently the available bandwidth is being used (e.g., a value near 1 corresponding to bandwidth efficiency, and a value near 0 corresponding to poor efficiency). D is the Downtime Factor corresponding to a frequency and duration of network downtime (e.g., where a value near 1 corresponds to minimal downtime). We, Wt, Wb, Wd are the weights assigned to each factor, reflecting their relative importance in the overall error risk of the configuration. The weights may be based on administrator and/or manufacture preferences.

The code embedding circuitry 208 of FIG. 2 prepares the information from the database 200 with the information determined by the clustering circuitry 204 and/or the risk calculation circuitry 206 to be stored in the databases 110 and/or 108. For example, the code embedding circuitry can use the determined and/or accessed information to generate a first vector for storing in the firmware/software knowledge database 108 and/or a second vector for storing in the cluster knowledge database 110. The code embedding circuitry 208 can generate the first vector to include, for each cluster in a network, the theoretical functional data (e.g., the user-defined IPU type, node policy, FXP rule set, P4 application, etc.) for the IPUs in the cluster, the inferred functional tag of the cluster, the fitness index corresponding to the cluster, and the error index corresponding to the cluster. After the code embedding circuitry 208 generates the first vector, the code embedding circuitry 310 stores the first vector into the firmware/software knowledge database 108. As described above, the firmware/software knowledge database 108 may store vectors associated with various different IPU networks so that the information can be leveraged by the configuration assets generation circuitry 112 of FIG. 1.

Additionally, the code embedding circuitry 208 of FIG. 2 can generate the second vector to include, for each cluster in a network, a cluster identifier, the inferred functional tag of the cluster, the fitness index corresponding to the cluster, and the error index corresponding to the cluster. After the code embedding circuitry 208 generates the second vector, the code embedding circuitry 310 stores the second vector into the cluster knowledge database 110. As described above, the cluster knowledge database 110 may store vectors associated with various different IPU networks so that the information can be leveraged by the configuration assets generation circuitry 112 of FIG. 1.

FIG. 3 is a block diagram of an example implementation of the configuration assets generation circuitry 112 of FIG. 1 to generate configuration assets for IPUs that will be deployed in a network based on a prompt. The configuration assets generation circuitry 112 of FIG. 3 may be instantiated (e.g., creating an instance of, bring into being for any length of time, materialize, implement, etc.) by programmable circuitry such as a Central Processor Unit (CPU) executing first instructions. Additionally or alternatively, the configuration assets generation circuitry 112 of FIG. 3 may be instantiated (e.g., creating an instance of, bring into being for any length of time, materialize, implement, etc.) by (i) an Application Specific Integrated Circuit (ASIC) and/or (ii) a Field Programmable Gate Array (FPGA) structured and/or configured in response to execution of second instructions to perform operations corresponding to the first instructions. It should be understood that some or all of the circuitry of FIG. 3 may, thus, be instantiated at the same or different times. Some or all of the circuitry of FIG. 3 may be instantiated, for example, in one or more threads executing concurrently on hardware and/or in series on hardware. Moreover, in some examples, some or all of the circuitry of FIG. 3 may be implemented by microprocessor circuitry executing instructions and/or FPGA circuitry performing operations to implement one or more virtual machines and/or containers. The configuration assets generation circuitry 112 of FIG. 3 includes API prompt circuitry 301, example semantic retrieval circuitry 302, example AI-based models, example model re-trainer circuitry 306, example code static validation circuitry 308, and example deployment circuitry 310. FIG. 3 further includes the example firmware/software knowledge database 108 of FIG. 1.

The API prompt circuitry 301 of FIG. 1 collects prompts (e.g., queries via a user interface) from a user and/or machine (e.g., via an API request) and generates configuration assets based on the collected prompts. In some examples, the prompts correspond to one or more SLAs and/or SLOs. The API prompt circuitry 301 may normalize the data corresponding to the prompt and produce the initial query with the main concepts mentioned in the prompt. The API prompt circuitry 301 passes the initial query to the semantics retrieval circuitry 302. After the AI-based model(s) 304 output(s) one or more configuration assets based on the prompt, the API prompt circuitry 301 forwards the one or more configuration assets to the code static validation circuitry 308 for validation.

The semantic retrieval circuitry 302 obtains the initial inquiry from the API prompt circuitry 301 and generates an enriched query based on one or more vectors corresponding to the initial inquiry stored in the firmware/software knowledge database 108. For example, if the initial query corresponds to tuning of a fiber channel protocol (FCP), the semantic retrieval circuitry 302 can retrieve documents best suited for the tuning of the FCP (e.g., that increases speed and accuracy). The semantic retrieval circuitry 302 can perform a similarity search and/or a semantic search based on the initial query to receive one or more vectors that are suited for the prompt. For example, for an input prompt of "I need to configure an IPU model X as a firewall for internet with characteristics y and z." the semantic retrieval circuitry 302 accesses information from the database 108 related to the prompt to add context to the initial prompt. For example, the semantic retrieval circuitry 302 adds all the articles (e.g., vectors) from the database 108 related to a specific IPU model X, instructions on how to configure a firewall, and any additional article related to the specific characteristics y and z to include in the enriched query. The semantic retrieval circuitry 302 may be implemented by a retrieval augmented architecture (RAG). The semantic retrieval circuitry 302 outputs the enriched query to the AI-based models 304.

The AI-based models 304 are LLMs that have been trained to, based on an enriched query, generate output a program corresponding to code and/or packages (e.g., configuration assets) to deploy to one or more IPUs in a network based on a prompt. For example, if the user generates a prompt to "configure a CLP-MODEL IPUII as a firewall for extranet with . . .," one of the AI-based models 304 will obtain an enriched query corresponding to the prompt and output one or more configuration assets to satisfy the request in the prompt. The AI-based models 304 may include a first model for generating node policies, a second model for generating FXP rules, and a third model for generating P4 packages. Depending on the prompt from the user and/or machine, the enriched queries are applied to one or more of the AI-based models 304. For example, if the prompt requests correspond to a generation of FXP rules, the semantic retrieval circuitry will output the enriched request to the AI-based model 304 trained to generate FXP rules. In some examples, the AI-based model 304 may generate the configuration asserts that satisfies one or more SLAs and/or SLOs. The AI-based models 304 support RAG architectures that enable the AI-based models 304 to input the enriched query that includes context information provided by the information in the firmware/software knowledge database 108. The AI-based model(s) 304 transmits the output configuration asset(s) to the API prompt circuitry 301 and/or the model retrainer circuitry 306.

The model retrainer circuitry 306 of FIG. 3 retrains and/or tunes the AI-based models 304 after new vectors have been stored in the firmware/software knowledge database 108. Accordingly, as the firmware/software knowledge database 108 develops knowledge from other networks, the model retrainer 306 updates the AI-based models 304 to become more accurate (e.g., to generate new more accurate code for functional labels). The model retrainer circuitry 306 may retrain and/or tune the AI-based models 304 periodically, aperiodically, and/or based on a trigger (e.g., when the database 108 has been updated, based on a command from a user or machine, etc.).

The code static validation circuitry 308 of FIG. 3 obtains the configuration assets (e.g., the generated code and/or package) from the AI-based models 304 (e.g., via the API prompt circuitry 301) and validates the generated code. For example, the code static validation circuitry 308 can check the code for accuracy and/or errors. The code static validation circuitry 308 can also check the code to verify that the code is complete from a syntactic point of view. In some examples, (e.g., for generated P4 packages), the code static validation circuitry 308 can compile elements of the P4 package. In some examples, the code static validation circuitry 308 can implement the code in a virtual simulation of the network and/or the IPU to verify that it will work as intended. If the code static validation circuitry 308 cannot validate the code and/or package, the code static validation circuitry 308 may adjust the code so that it is valid. If the code static validation circuitry 308 cannot adjust the code to make the code valid, the code static validation circuitry 308 may output an error to the user and/or machine that generated the prompt. The error may include the generated configuration assets and/or any information related to why it was not validated. In some examples, the code static validation circuitry 308 may output non-validated configuration asset information to the model retrainer circuitry 306 to retrain and/or tune the AI-based models 304 to reduce invalid outputs. If the configuration asset is valid and/or becomes valid, the code static validation circuitry 308 outputs the configuration to the deployer circuitry 310.

The deployer circuitry 310 of FIG. 3 is a network interface to deploy a program corresponding to verified configuration assets to one or more IPUs in a network. In some examples, the deployer circuitry 310 also the staggered deployment of newly generated code according to an identified cluster. Additionally, the deployer circuitry 310 can enable initial testing of operations and scale deployments.

FIG. 4 is a block diagram of an additional and/or alternative example implementation of the configuration assets generation circuitry 112 of FIG. 1 to generate configuration assets based on a monitored network of IPUs. The configuration assets generation circuitry 112 of FIG. 4 may be instantiated (e.g., creating an instance of, bring into being for any length of time, materialize, implement, etc.) by programmable circuitry such as a Central Processor Unit (CPU) executing first instructions. Additionally or alternatively, the configuration assets generation circuitry 112 of FIG. 4 may be instantiated (e.g., creating an instance of, bring into being for any length of time, materialize, implement, etc.) by (i) an Application Specific Integrated Circuit (ASIC) and/or (ii) a Field Programmable Gate Array (FPGA) structured and/or configured in response to execution of second instructions to perform operations corresponding to the first instructions. It should be understood that some or all of the circuitry of FIG. 4 may, thus, be instantiated at the same or different times. Some or all of the circuitry of FIG. 4 may be instantiated, for example, in one or more threads executing concurrently on hardware and/or in series on hardware. Moreover, in some examples, some or all of the circuitry of FIG. 4 may be implemented by microprocessor circuitry executing instructions and/or FPGA circuitry performing operations to implement one or more virtual machines and/or containers. The configuration assets generation circuitry 112 of FIG. 4 includes the example recommender circuitry 402. FIG. 4 further includes the example cluster knowledge database 110 of FIG. 1.

The recommender circuitry 402 of FIG. 4 obtains current IPU deployment information (e.g., information related to the configuration of IPUs in a network, the configuration assets implemented by the IPUs, and/or telemetry data from the IPUs running in a network) and generates suggested configuration assets based on the obtained data and the information in the cluster knowledge database 110. For example, the recommender circuitry 402 may be a trained AI-based model that can leverage current IPU deployment information with the cluster knowledge to generate a recommend configuration asset for one or more IPUs in the current IPU deployment. The recommender circuitry 402 generates a reconfiguration recommendation by identifying configurations from the cluster knowledge database 110 which have demonstrated optimal (e.g., above a threshold) performance and reliability with respect to similarity in deployment scenarios and operational requirements, high FRI and ERI scores indicating successful configurations, and historical performance data and any known issues or optimizations. The recommender circuitry 402 considers the current state of the network, any recent changes, and predicted future conditions. After the recommender circuitry 402 generates the recommended configuration assets, the recommender circuitry 402 may compare the generated configuration asset(s) to the currently deployed configuration assets to determine if the generated configuration asset(s) will result in a more efficient or less error prone IPU network. If the recommender circuitry 402 determines that the generated configuration assets are better (e.g., more efficient, will results in less errors, retransmission, latency, etc.), the recommender circuitry 402 outputs the generate configuration assets to a network engineer. In some examples, the recommender circuitry 402 may automatically deploy a program corresponding to generated configuration assets to IPUs in the network.

While an example manner of implementing the IPU knowledge generation circuitry 106 and the configuration assets generation circuitry 112 of FIG. 1 is illustrated in FIGS. 2-4, one or more of the elements, processes, and/or devices illustrated in FIGS. 2-4 may be combined, divided, re-arranged, omitted, eliminated, and/or implemented in any other way. Further, the interface circuitry 202, the clustering circuitry 204, the risk calculation circuitry 206, the code embedding circuitry 208, example API prompt circuitry 301, example semantic retrieval circuitry 302, example AI-based models 304, example model retrainer circuitry 306, the code static validation circuitry 308, the deployer circuitry 310, the recommender circuitry 402, and/or, more generally, the IPU knowledge generation circuitry 106 and the configuration assets generation circuitry 112 of FIGS. 2-4, may be implemented by hardware alone or by hardware in combination with software and/or firmware. Thus, for example, any of the interface circuitry 202, the clustering circuitry 204, the risk calculation circuitry 206, the code embedding circuitry 208, example API prompt circuitry 301, example semantic retrieval circuitry 302, example AI-based models 304, example model retrainer circuitry 306, the code static validation circuitry 308, the deployer circuitry 310, the recommender circuitry 402, and/or, more generally, the IPU knowledge generation circuitry 106 and the configuration assets generation circuitry 112 of FIGS. 2-4, could be implemented by programmable circuitry in combination with machine-readable instructions (e.g., firmware or software), processor circuitry, analog circuit(s), digital circuit(s), logic circuit(s), programmable processor(s), programmable microcontroller(s), graphics processing unit(s) (GPU(s)), digital signal processor(s) (DSP(s)), ASIC(s), programmable logic device(s) (PLD(s)), and/or field programmable logic device(s) (FPLD(s)) such as FPGAs. Further still, the IPU knowledge generation circuitry 106 and the configuration assets generation circuitry 112 of FIGS. 2-4 may include one or more elements, processes, and/or devices in addition to, or instead of, those illustrated in FIGS. 1-4, and/or may include more than one of any or all of the illustrated elements, processes, and devices.

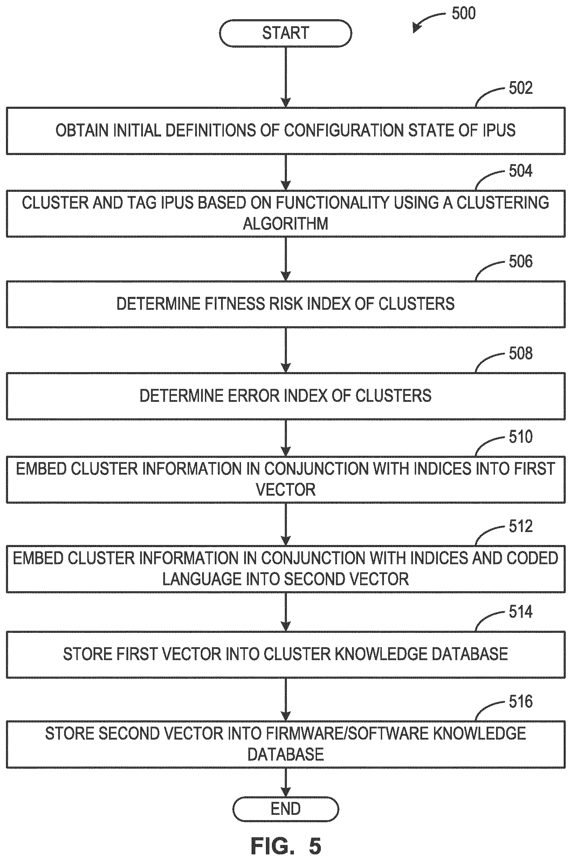

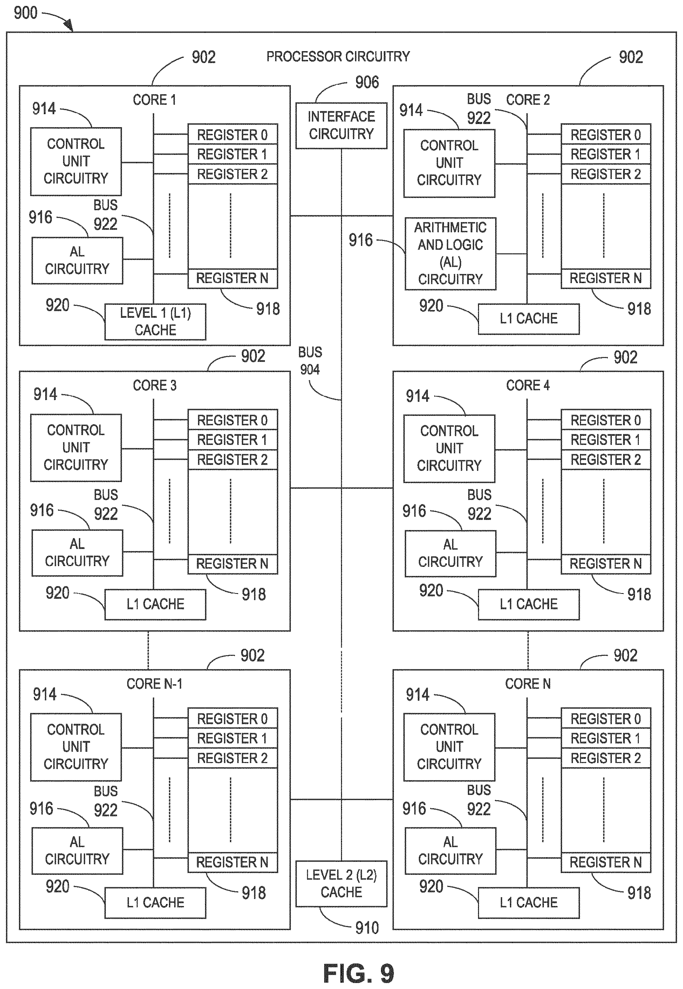

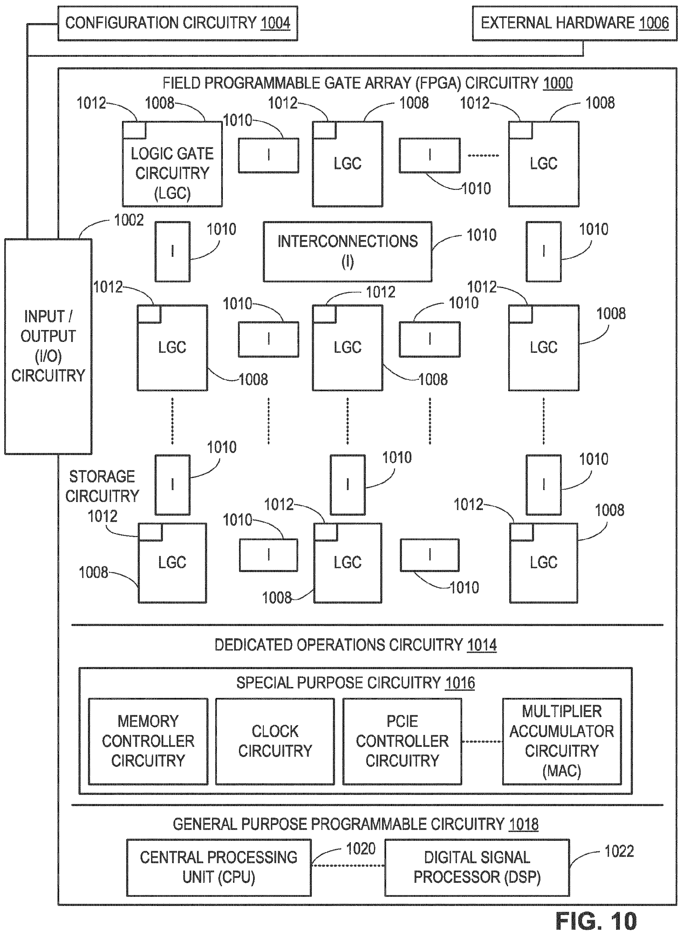

Flowchart(s) representative of example machine-readable instructions, which may be executed by programmable circuitry to implement and/or instantiate the IPU knowledge generation circuitry 106 and the configuration assets generation circuitry 112 of FIGS. 2-4 and/or representative of example operations which may be performed by programmable circuitry to implement and/or instantiate the IPU knowledge generation circuitry 106 and the configuration assets generation circuitry 112 of FIGS. 2-4, is shown in FIGS. 5-7. The machine-readable instructions may be one or more executable programs or portion(s) of one or more executable programs for execution by programmable circuitry such as the programmable circuitry 812 shown in the example processor platform 800 discussed below in connection with FIG. 8 and/or may be one or more function(s) or portion(s) of functions to be performed by the example programmable circuitry (e.g., an FPGA) discussed below in connection with FIGS. 9 and/or 10. In some examples, the machine-readable instructions cause an operation, a task, etc., to be carried out and/or performed in an automated manner in the real world. As used herein, "automated" means without human involvement.

The program may be embodied in instructions (e.g., software and/or firmware) stored on one or more non-transitory computer readable and/or machine-readable storage medium such as cache memory, a magnetic-storage device or disk (e.g., a floppy disk, a Hard Disk Drive (HDD), etc.), an optical-storage device or disk (e.g., a Blu-ray disk, a Compact Disk (CD), a Digital Versatile Disk (DVD), etc.), a Redundant Array of Independent Disks (RAID), a register, ROM, a solid-state drive (SSD), SSD memory, non-volatile memory (e.g., electrically erasable programmable read-only memory (EEPROM), flash memory, etc.), volatile memory (e.g., Random Access Memory (RAM) of any type, etc.), and/or any other storage device or storage disk. The instructions of the non-transitory computer readable and/or machine-readable medium may program and/or be executed by programmable circuitry located in one or more hardware devices, but the entire program and/or parts thereof could alternatively be executed and/or instantiated by one or more hardware devices other than the programmable circuitry and/or embodied in dedicated hardware. The machine-readable instructions may be distributed across multiple hardware devices and/or executed by two or more hardware devices (e.g., a server and a client hardware device). For example, the client hardware device may be implemented by an endpoint client hardware device (e.g., a hardware device associated with a human and/or machine user) or an intermediate client hardware device gateway (e.g., a radio access network (RAN)) that may facilitate communication between a server and an endpoint client hardware device. Similarly, the non-transitory computer readable storage medium may include one or more mediums. Further, although the example program is described with reference to the flowchart(s) illustrated in FIGS. 5-7, many other methods of implementing the IPU knowledge generation circuitry 106 and the configuration assets generation circuitry 112 of FIGS. 2-4 may alternatively be used. For example, the order of execution of the blocks of the flowchart(s) may be changed, and/or some of the blocks described may be changed, eliminated, or combined. Additionally or alternatively, any or all of the blocks of the flow chart may be implemented by one or more hardware circuits (e.g., processor circuitry, discrete and/or integrated analog and/or digital circuitry, an FPGA, an ASIC, a comparator, an operational-amplifier (op-amp), a logic circuit, etc.) structured to perform the corresponding operation without executing software or firmware. The programmable circuitry may be distributed in different network locations and/or local to one or more hardware devices (e.g., a single-core processor (e.g., a single core CPU), a multi-core processor (e.g., a multi-core CPU, an XPU, etc.)). For example, the programmable circuitry may be a CPU and/or an FPGA located in the same package (e.g., the same integrated circuit (IC) package or in two or more separate housings), one or more processors in a single machine, multiple processors distributed across multiple servers of a server rack, multiple processors distributed across one or more server racks, etc., and/or any combination(s) thereof.

The machine-readable instructions described herein may be stored in one or more of a compressed format, an encrypted format, a fragmented format, a compiled format, an executable format, a packaged format, etc. Machine-readable instructions as described herein may be stored as data (e.g., computer-readable data, machine-readable data, one or more bits (e.g., one or more computer-readable bits, one or more machine-readable bits, etc.), a bitstream (e.g., a computer-readable bitstream, a machine-readable bitstream, etc.), etc.) or a data structure (e.g., as portion(s) of instructions, code, representations of code, etc.) that may be utilized to create, manufacture, and/or produce machine executable instructions. For example, the machine-readable instructions may be fragmented and stored on one or more storage devices, disks and/or computing devices (e.g., servers) located at the same or different locations of a network or collection of networks (e.g., in the cloud, in edge devices, etc.). The machine-readable instructions may require one or more of installation, modification, adaptation, updating, combining, supplementing, configuring, decryption, decompression, unpacking, distribution, reassignment, compilation, etc., in order to make them directly readable, interpretable, and/or executable by a computing device and/or other machine. For example, the machine-readable instructions may be stored in multiple parts, which are individually compressed, encrypted, and/or stored on separate computing devices, wherein the parts when decrypted, decompressed, and/or combined form a set of computer-executable and/or machine executable instructions that implement one or more functions and/or operations that may together form a program such as that described herein.

In another example, the machine-readable instructions may be stored in a state in which they may be read by programmable circuitry, but require addition of a library (e.g., a dynamic link library (DLL)), a software development kit (SDK), an application programming interface (API), etc., in order to execute the machine-readable instructions on a particular computing device or other device. In another example, the machine-readable instructions may need to be configured (e.g., settings stored, data input, network addresses recorded, etc.) before the machine-readable instructions and/or the corresponding program(s) can be executed in whole or in part. Thus, machine-readable, computer-readable, and/or machine-readable media, as used herein, may include instructions and/or program(s) regardless of the particular format or state of the machine-readable instructions and/or program(s).

The machine-readable instructions described herein can be represented by any past, present, or future instruction language, scripting language, programming language, etc. For example, the machine-readable instructions may be represented using any of the following languages: C, C++, Java, C#, Perl, Python, JavaScript, HyperText Markup Language (HTML), Structured Query Language (SQL), Swift, Go Lang, PyTorch, Rust, etc.

As mentioned above, the example operations of FIG. 3 may be implemented using executable instructions (e.g., computer readable and/or machine-readable instructions) stored on one or more non-transitory computer readable and/or machine-readable media. As used herein, the terms non-transitory computer readable medium, non-transitory computer readable storage medium, non-transitory machine-readable medium, and/or non-transitory machine-readable storage medium are expressly defined to include any type of computer readable storage device and/or storage disk and to exclude propagating signals and to exclude transmission media. Examples of such non-transitory computer readable medium, non-transitory computer readable storage medium, non-transitory machine-readable medium, and/or non-transitory machine-readable storage medium include optical storage devices, magnetic storage devices, an HDD, a flash memory, a read-only memory (ROM), a CD, a DVD, a cache, a RAM of any type, a register, and/or any other storage device or storage disk in which information is stored for any duration (e.g., for extended time periods, permanently, for brief instances, for temporarily buffering, and/or for caching of the information). As used herein, the terms "non-transitory computer readable storage device" and "non-transitory machine-readable storage device" are defined to include any physical (mechanical, magnetic and/or electrical) hardware to retain information for a time period, but to exclude propagating signals and to exclude transmission media. Examples of non-transitory computer readable storage devices and/ or non-transitory machine-readable storage devices include random access memory of any type, read only memory of any type, solid state memory, flash memory, optical discs, magnetic disks, disk drives, and/or redundant array of independent disks (RAID) systems. As used herein, the term "device" refers to physical structure such as mechanical and/or electrical equipment, hardware, and/or circuitry that may or may not be configured by computer readable instructions, machine-readable instructions, etc., and/or manufactured to execute computer-readable instructions, machine-readable instructions, etc.

"Including" and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc., may be present without falling outside the scope of the corresponding claim or recitation. As used herein, when the phrase "at least" is used as the transition term in, for example, a preamble of a claim, it is open-ended in the same manner as the term "comprising" and "including" are open ended. The term "and/or" when used, for example, in a form such as A, B, and/or C refers to any combination or subset of A, B, C such as (1) A alone, (2) B alone, (3) C alone, (4) A with B, (5) A with C, (6) B with C, or (7) A with B and with C. As used herein in the context of describing structures, components, items, objects and/or things, the phrase "at least one of A and B" is intended to refer to implementations including any of (1) at least one A, (2) at least one B, or (3) at least one A and at least one B. Similarly, as used herein in the context of describing structures, components, items, objects and/or things, the phrase "at least one of A or B" is intended to refer to implementations including any of (1) at least one A, (2) at least one B, or (3) at least one A and at least one B. As used herein in the context of describing the performance or execution of processes, instructions, actions, activities and/or operations, the phrase "at least one of A and B" is intended to refer to implementations including any of (1) at least one A, (2) at least one B, or (3) at least one A and at least one B. Similarly, as used herein in the context of describing the performance or execution of processes, instructions, actions, activities and/or operations, the phrase "at least one of A or B" is intended to refer to implementations including any of (1) at least one A, (2) at least one B, or (3) at least one A and at least one B.

As used herein, singular references (e.g., "a", "an", "first", "second", etc.) do not exclude a plurality. The term "a" or "an" object, as used herein, refers to one or more of that object. The terms "a" (or "an"), "one or more", and "at least one" are used interchangeably herein. Furthermore, although individually listed, a plurality of means, elements, or actions may be implemented by, e.g., the same entity or object. Additionally, although individual features may be included in different examples or claims, these may possibly be combined, and the inclusion in different examples or claims does not imply that a combination of features is not feasible and/or advantageous.

Descriptors "first," "second," "third," etc. are used herein when identifying multiple elements or components which may be referred to separately. Unless otherwise specified or understood based on their context of use, such descriptors are not intended to impute any meaning of priority or ordering in time but merely as labels for referring to multiple elements or components separately for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for ease of referencing multiple elements or components.

As used herein, the phrase "in communication," including variations thereof, encompasses direct communication and/or indirect communication through one or more intermediary components, and does not require direct physical (e.g., wired) communication and/or constant communication, but rather additionally includes selective communication at periodic intervals, scheduled intervals, aperiodic intervals, and/or one-time events.

As used herein, "programmable circuitry" is defined to include (i) one or more special purpose electrical circuits (e.g., an application specific circuit (ASIC)) structured to perform specific operation(s) and including one or more semiconductor-based logic devices (e.g., electrical hardware implemented by one or more transistors), and/or (ii) one or more general purpose semiconductor-based electrical circuits programmable with instructions to perform specific functions(s) and/or operation(s) and including one or more semiconductor-based logic devices (e.g., electrical hardware implemented by one or more transistors). Examples of programmable circuitry include programmable microprocessors such as Central Processor Units (CPUs) that may execute first instructions to perform one or more operations and/or functions, Field Programmable Gate Arrays (FPGAs) that may be programmed with second instructions to cause configuration and/or structuring of the FPGAs to instantiate one or more operations and/or functions corresponding to the first instructions, Graphics Processor Units (GPUs) that may execute first instructions to perform one or more operations and/or functions, Digital Signal Processors (DSPs) that may execute first instructions to perform one or more operations and/or functions, XPUs, Network Processing Units (NPUs) one or more microcontrollers that may execute first instructions to perform one or more operations and/or functions and/or integrated circuits such as Application Specific

**EP 4 672 694 A1**

Integrated Circuits (ASICs). For example, an XPU may be implemented by a heterogeneous computing system including multiple types of programmable circuitry (e.g., one or more FPGAs, one or more CPUs, one or more GPUs, one or more NPUs, one or more DSPs, one or more data processing units (DPUs), one or more edge processing units (EPUs), one or more infrastructure processing units (IPUs), etc., and/or any combination(s) thereof), and orchestration technology (e.g., application programming interface(s) (API(s)) that may assign computing task(s) to whichever one(s) of the multiple types of programmable circuitry is/are suited and available to perform the computing task(s).

As used herein integrated circuit/circuitry is defined as one or more semiconductor packages containing one or more circuit elements such as transistors, capacitors, inductors, resistors, current paths, diodes, etc. For example, an integrated circuit may be implemented as one or more of an ASIC, an FPGA, a chip, a microchip, programmable circuitry, a semiconductor substrate coupling multiple circuit elements, a system on chip (SoC), etc.

FIG. 5 is a flowchart representative of example machine-readable instructions and/or example operations 500 that may be executed, instantiated, and/or performed by programmable circuitry(ies) to generate knowledge data for the databases 108, 110 of FIG. 1 that can be leveraged to generate configuration assets. For example, the example operations 500 may be executed, instantiated, and/or performed by the IPU knowledge generation circuitry 106 of FIG. 2. The example machine-readable instructions and/or the example operations 500 of FIG. 5 begin at block 502, at which the interface circuitry 202 obtains the initial definitions of the configuration state of IPUs to be deployed. The configuration state may include the number IPUs, the capacity and/or capability of the IPUs, the theatrical functional tags generated by a user for the IPU(s) when deploying the IPU(s), the initial configuration assets of the IPU(s) etc.

At block 504, the clustering circuitry 204 clusters and tags the IPUs based on the functionality of the IPUs (e.g., switch, router, firewall, small switch, medium switch, large switch, small router, large router, extranet firewall, intranet firewall, etc.) after deployment using a clustering algorithm. The clustering techniques utilized by the clustering circuitry 204 allow joint management of equipment both with similar initial characteristics (e.g., number of virtual ports, downlinks, uplinks, buffer sizes, etc.) and with deployment differences (e.g., supported subnets, isolation policies, forwarding rules, etc.). At block 506, the risk calculation circuitry 206 determines the fitness risk index of the clusters. As described above in conjunction with FIG. 2, the risk calculation circuitry 206 utilizes telemetry data to determine a distance between the capacity and function required after deployment and the capabilities deployed/configured in each cluster in the network. At block 508, the risk calculation circuitry 206 determines the error index of the clusters. As described above in conjunction with FIG. 2, the risk calculation circuitry 206 generates the error index based on the latency, packet loss, retransmission rate, noise levels, etc. of the IPUs in each cluster.

At block 510, the code embedding circuitry 208 embeds the cluster information in conjunction with the indexes into a first vector. For example, the code embedding circuitry 208 generates the first vector to include a cluster identifier, the inferred functional tag of the cluster, the fitness risk index, and the error index. At block 512, the code embedding circuitry 208 embeds the cluster information in conjunction with the indices and the initial configuration assets of the IPUs in the cluster. For example, the code embedding circuitry 208 generates the second vector to include the inferred functional tag, the fitness index, the error index, and/or configuration assets of the IPU. At block 514, the code embedding circuitry 208 stores the first vector in the cluster knowledge database 110. At block 516, the code embedding circuitry 208 stores the second vector in the cluster knowledge database 110.

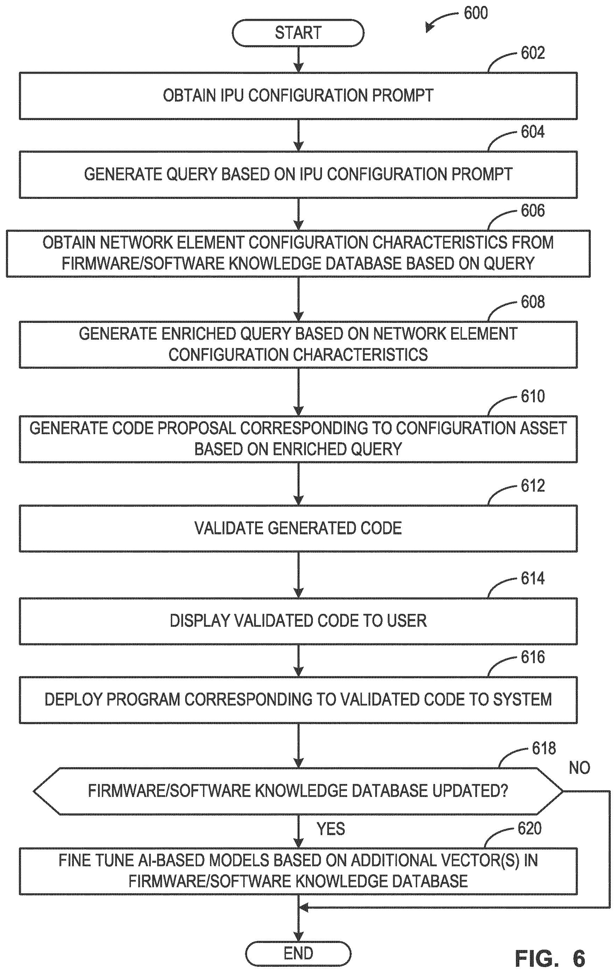

FIG. 6 is a flowchart representative of example machine-readable instructions and/or example operations 600 that may be executed, instantiated, and/or performed by programmable circuitry(ies) to generate configuration assets for one or more IPUs based on a prompt. For example, the example operations 600 may be executed, instantiated, and/or performed by the configuration assets generation circuitry 112 of FIG. 3. The example machine-readable instructions and/or the example operations 600 of FIG. 6 begin at block 602, at which the API prompt circuitry 301 obtains an IPU configuration prompt.

At block 604, the API prompt circuitry 301 generates an initial query based on the IPU configuration prompt. As described above in conjunction with FIG. 3, the API prompt circuitry 301 may normalize the data corresponding to the prompt and produce the initial query with the main concepts mentioned in the prompt. At block 606, the semantic retrieval circuitry 302 obtains network element configuration characteristics (e.g., a vector) from the firmware/software knowledge database 108 database based on the initial query. As described above, the network element configuration characteristics may include configuration assets(s) implemented by the IPUs in the cluster, the functional tag of the cluster, the fitness risk index, and the error index that correspond to the initial query.

At block 608, the semantic retrieval circuitry 302 generates an enriched query based on the network element configuration characteristics and the initial query. At block 610, one or more of the AI-based models 304 generate(s) one or more code proposals corresponding to configuration assets for the IPU(s) based on the enriched query. For example, if the enriched query corresponds to generation of an FXP rule set, the semantic retrieval circuitry 302 will output the enriched query to be applied as an input to one or more of the AI-based model(s) 304 trained to generate FXP rule sets based on enriched queries.

At block 612, the code static validation circuitry 308 validates the code generated by the one or more AI-based models 304. In some examples, the code static validation circuitry 308 may adjust the generate code if not validated, as further described above in conjunction with FIG. 3. At block 614, the configuration assets generation circuitry 112 displays the validated code to a user and/or administrator. For example, if a user generated a prompt to generate code, a user interface of the configuration assets generation circuitry 112 may output the generated prompt to the user after generated. At block 616, the deployer circuitry 310 deploys a program (e.g., an executable) corresponding the validated code (e.g., generated code for implementing generated configuration assets) to one or more IPUs in the network. In this manner, the one or more IPU can execute and/or instantiate the program to run the generated code.

At block 618, the model re-trainer circuitry 306 determines if the firmware/software knowledge database 108 has been updated (e.g., if a new vector has been added to the database 108). If the model-retrainer circuitry 306 determines that the firmware/software knowledge database 108 has not been updated (block 618: NO), the instructions end. If the model-retrainer circuitry 306 determines that the firmware/software knowledge database 108 has been updated (block 618: YES), the model re-trainer circuitry 306 fine tunes and/or retrains one or more of the model(s) 304 based on the additional vector(s) that have been stored in the firmware/software knowledge database 108 (block 620).

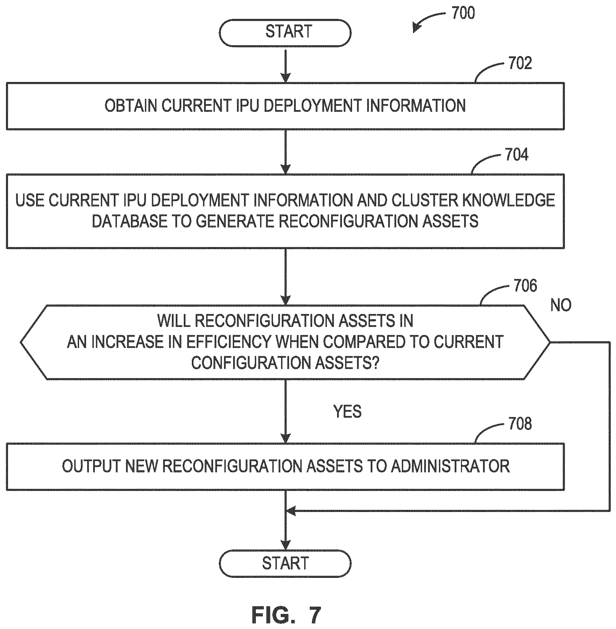

FIG. 7 is a flowchart representative of example machine-readable instructions and/or example operations 700 that may be executed, instantiated, and/or performed by programmable circuitry(ies) to generate a configuration asset recommendation for a monitor IPU network. For example, the example operations 700 may be executed, instantiated, and/or performed by the configuration assets generation circuitry 112 of FIG. 4. The example machine-readable instructions and/or the example operations 700 of FIG. 7 begin at block 702, at which the recommender circuitry 402 obtains current IPU deployment information. The IPU deployment information may include the configuration of the IPUs in a network, the configuration assets of the IPUs in the network, and/or telemetry data of the IPUs in the network.

At block 704, the recommender circuitry 402 uses the IPU deployment information and information from the cluster knowledge database 110 that corresponds to the IPU deployment information to generate one or more new reconfiguration assets (e.g., one or more new configuration assets that can be applied to one or more IPUs of the network). At block 706, the recommender circuitry 402 determines if implementing the reconfiguration policy will result in an increase in efficiency (e.g., lower latency, less retransmission, etc.) when compared to the current configuration assets deployed to the IPUs in the network.

If the recommender circuitry 402 determines if implementing the reconfiguration policy will result in an increase in efficiency (e.g., lower latency, less retransmission, etc.) when compared to the current configuration assets deployed to the IPUs in the network. If the recommender circuitry 402 determines that the reconfiguration policy will not result in an increase in efficiency (block 706: NO), the instructions end. If the recommender circuitry 402 determines that the reconfiguration policy will result in an increase in efficiency (block 706: YES), the recommender circuitry 402 outputs the newly generated reconfiguration assets to a user and/or administrator (block 708) via a user interface. In some examples, the recommender circuitry 402 may automatically deploy a program corresponding to the reconfiguration assets to the one or more IPUs in the network. For example, the recommender circuitry 402 may output the reconfiguration assets to the code static validation circuitry 308 to be validated and then deployed via the deployer circuitry 310.

FIG. 8 is a block diagram of an example programmable circuitry platform 800 structured to execute and/or instantiate the example machine-readable instructions and/or the example operations of FIGS. 5-7 to implement the IPU knowledge generation circuitry 106 and/or the configuration assets generation circuitry 112 of FIGS. 1-4. The programmable circuitry platform 800 can be, for example, a server, a personal computer, a workstation, a self-learning machine (e.g., a neural network), or any other type of computing and/or electronic device.

The programmable circuitry platform 800 of the illustrated example includes programmable circuitry 812. The programmable circuitry 812 of the illustrated example is hardware. For example, the programmable circuitry 812 can be implemented by one or more integrated circuits, logic circuits, FPGAs, microprocessors, CPUs, GPUs, DSPs, DPUs, EPUs, IPUs and/or microcontrollers from any desired family or manufacturer. The programmable circuitry 812 may be implemented by one or more semiconductor based (e.g., silicon based) devices. In this example, the interface circuitry 202, the clustering circuitry 204, the risk calculation circuitry 206, the code embedding circuitry 208, example API prompt circuitry 301, example semantic retrieval circuitry 302, example AI-based models 304, example model retrainer circuitry 306, the code static validation circuitry 308, the deployer circuitry 310, and the recommender circuitry 402 of FIGS. 2-4.

The programmable circuitry 812 of the illustrated example includes a local memory 813 (e.g., a cache, registers, etc.). The programmable circuitry 812 of the illustrated example is in communication with main memory 814, 816, which includes a volatile memory 814 and a non-volatile memory 816, by a bus 818. The volatile memory 814 may be implemented by Synchronous Dynamic Random Access Memory (SDRAM), Dynamic Random Access Memory (DRAM), RAMBUS® Dynamic Random Access Memory (RDRAM®), High Bandwidth Memory (HBM), and/or any other type of RAM device. The non-volatile memory 816 may be implemented by flash memory and/or any other desired type of memory device. Access to the main memory 814, 816 of the illustrated example is controlled by a memory controller 817. In some examples, the memory controller 817 may be implemented by one or more integrated circuits, logic circuits, microcontrollers from any desired family or manufacturer, or any other type of circuitry to manage the flow of data going to and from the main memory 814, 816. Any one or more of the main memory 814, 816 or the local memory 813 can implement one or more of the databases 108, 110, 200 of FIGS. 1 and/or 2.

The programmable circuitry platform 800 of the illustrated example also includes interface circuitry 820. The interface circuitry 820 may be implemented by hardware in accordance with any type of interface standard, such as an Ethernet interface, a universal serial bus (USB) interface, a Bluetooth® interface, a near field communication (NFC) interface, a Peripheral Component Interconnect (PCI) interface, and/or a Peripheral Component Interconnect Express (PCIe) interface.

In the illustrated example, one or more input devices 822 are connected to the interface circuitry 820. The input device(s) 822 permit(s) a user (e.g., a human user, a machine user, etc.) to enter data and/or commands into the programmable circuitry 812. The input device(s) 822 can be implemented by, for example, a keyboard, a button, a mouse, and/or a touchscreen.

One or more output devices 824 are also connected to the interface circuitry 820 of the illustrated example. The output device(s) 824 can be implemented, for example, by display devices (e.g., a light emitting diode (LED), an organic light emitting diode (OLED), a liquid crystal display (LCD), a cathode ray tube (CRT) display, an in-place switching (IPS) display, a touchscreen, etc.), and/or speaker. The interface circuitry 820 of the illustrated example, thus, typically includes a graphics driver card, a graphics driver chip, and/or graphics processor circuitry such as a GPU.

The interface circuitry 820 of the illustrated example also includes a communication device such as a transmitter, a receiver, a transceiver, a modem, a residential gateway, a wireless access point, and/or a network interface to facilitate exchange of data with external machines (e.g., computing devices of any kind) by a network 826. The communication can be by, for example, an Ethernet connection, a digital subscriber line (DSL) connection, a telephone line connection, a coaxial cable system, an optical fiber connection, a satellite system, a beyond-line-of-sight wireless system, a line-of-sight wireless system, a cellular telephone system, an optical connection, etc.

The programmable circuitry platform 800 of the illustrated example also includes one or more mass storage discs or devices 828 to store firmware, software, and/or data. Examples of such mass storage discs or devices 828 include magnetic storage devices (e.g., floppy disk, drives, HDDs, etc.), optical storage devices (e.g., Blu-ray disks, CDs, DVDs, etc.), RAID systems, and/or solid-state storage discs or devices such as flash memory devices and/or SSDs.

The machine-readable instructions 832, which may be implemented by the machine-readable instructions of FIGS. 5-7, may be stored in the mass storage device 828, in the volatile memory 814, in the non-volatile memory 816, and/or on at least one non-transitory computer readable storage medium such as a CD or DVD which may be removable.

FIG. 9 is a block diagram of an example implementation of the programmable circuitry 812 of FIG. 8. In this example, the programmable circuitry 812 of FIG. 8 is implemented by a microprocessor 900. For example, the microprocessor 900 may be a general-purpose microprocessor (e.g., general-purpose microprocessor circuitry). The microprocessor 900 executes some or all of the machine-readable instructions of the flowcharts of FIG. 5-7 to effectively instantiate the circuitry of FIGS. 1, 2, 3, and/or 4 as logic circuits to perform operations corresponding to those machine-readable instructions. In some such examples, the circuitry of FIGS. 9 and/or 10 is instantiated by the hardware circuits of the microprocessor 900 in combination with the machine-readable instructions. For example, the microprocessor 900 may be implemented by multi-core hardware circuitry such as a CPU, a DSP, a GPU, an XPU, a DPU, an EPU an IPU, etc. Although it may include any number of example cores 902 (e.g., 1 core), the microprocessor 900 of this example is a multi-core semiconductor device including N cores. The cores 902 of the microprocessor 900 may operate independently or may cooperate to execute machine-readable instructions. For example, machine code corresponding to a firmware program, an embedded software program, or a software program may be executed by one of the cores 902 or may be executed by multiple ones of the cores 902 at the same or different times. In some examples, the machine code corresponding to the firmware program, the embedded software program, or the software program is split into threads and executed in parallel by two or more of the cores 902. The software program may correspond to a portion or all of the machine-readable instructions and/or operations represented by the flowcharts of FIG. 5-7.

The cores 902 may communicate by a first example bus 904. In some examples, the first bus 904 may be implemented by a communication bus to effectuate communication associated with one(s) of the cores 902. For example, the first bus 904 may be implemented by at least one of an Inter-Integrated Circuit (I2C) bus, a Serial Peripheral Interface (SPI) bus, a PCI bus, or a PCIe bus. Additionally or alternatively, the first bus 904 may be implemented by any other type of computing or electrical bus. The cores 902 may obtain data, instructions, and/or signals from one or more external devices by example interface circuitry 906. The cores 902 may output data, instructions, and/or signals to the one or more external devices by the interface circuitry 906. Although the cores 902 of this example include example local memory 920 (e.g., Level 1 (L1) cache that may be split into an L1 data cache and an L1 instruction cache), the microprocessor 900 also includes example shared memory 910 that may be shared by the cores (e.g., Level 2 (L2 cache)) for high-speed access to data and/or instructions. However, in some examples the L2 cache is connected to each core 902 and the shared memory 910 is implemented by level 3 (L3) cache for high-speed access to data and/or instructions. Data and/or instructions may be transferred (e.g., shared) by writing to and/or reading from the shared memory 910. The local memory 920 of each of the cores 902 and the shared memory 910 may be part of a hierarchy of storage devices including multiple levels of cache memory and the main memory (e.g., the main memory 814, 816 of FIG. 8). Typically, higher levels of memory in the hierarchy exhibit lower access time and have smaller storage capacity than lower levels of memory. Changes in the various levels of the cache hierarchy are managed (e.g., coordinated) by a cache coherency policy.

Each core 902 may be referred to as a CPU, DSP, GPU, DPU, EPU, IPU, etc., or any other type of hardware circuitry. Each core 902 includes control unit circuitry 914, arithmetic and logic (AL) circuitry (sometimes referred to as an ALU) 916, a plurality of registers 918, the local memory 920, and a second example bus 922. Other structures may be present. For example, each core 902 may include vector unit circuitry, single instruction multiple data (SIMD) unit circuitry, load/store unit (LSU) circuitry, branch/jump unit circuitry, floating-point unit (FPU) circuitry, etc. The control unit circuitry 914 includes semiconductor-based circuits structured to control (e.g., coordinate) data movement within the corresponding core 902. The AL circuitry 916 includes semiconductor-based circuits structured to perform one or more mathematic and/or logic operations on the data within the corresponding core 902. The AL circuitry 916 of some examples performs integer based operations. In other examples, the AL circuitry 916 also performs floating-point operations. In yet other examples, the AL circuitry 916 may include first AL circuitry that performs integer-based operations and second AL circuitry that performs floating-point operations. In some examples, the AL circuitry 916 may be referred to as an Arithmetic Logic Unit (ALU).

The registers 918 are semiconductor-based structures to store data and/or instructions such as results of one or more of the operations performed by the AL circuitry 916 of the corresponding core 902. For example, the registers 918 may include vector register(s), SIMD register(s), general-purpose register(s), flag register(s), segment register(s), machine-specific register(s), instruction pointer register(s), control register(s), debug register(s), memory management register(s), machine check register(s), etc. The registers 918 may be arranged in a bank as shown in FIG. 9. Alternatively, the registers 918 may be organized in any other arrangement, format, or structure, such as by being distributed throughout the core 902 to shorten access time. The second bus 922 may be implemented by at least one of an I2C bus, a SPI bus, a PCI bus, or a PCIe bus.

Each core 902 and/or, more generally, the microprocessor 900 may include additional and/or alternate structures to those shown and described above. For example, one or more clock circuits, one or more power supplies, one or more power gates, one or more cache home agents (CHAs), one or more converged/common mesh stops (CMSs), one or more shifters (e.g., barrel shifter(s)) and/or other circuitry may be present. The microprocessor 900 is a semiconductor device fabricated to include many transistors interconnected to implement the structures described above in one or more integrated circuits (ICs) contained in one or more packages.

The microprocessor 900 may include and/or cooperate with one or more accelerators (e.g., acceleration circuitry, hardware accelerators, etc.). In some examples, accelerators are implemented by logic circuitry to perform certain tasks more quickly and/or efficiently than can be done by a general-purpose processor. Examples of accelerators include ASICs and FPGAs such as those discussed herein. A GPU, DSP and/or other programmable device can also be an accelerator. Accelerators may be on-board the microprocessor 900, in the same chip package as the microprocessor 900 and/or in one or more separate packages from the microprocessor 900.

FIG. 10 is a block diagram of another example implementation of the programmable circuitry 812 of FIG. 8. In this example, the programmable circuitry 812 is implemented by FPGA circuitry 1000. For example, the FPGA circuitry 1000 may be implemented by an FPGA. The FPGA circuitry 1000 can be used, for example, to perform operations that could otherwise be performed by the example microprocessor 900 of FIG. 9 executing corresponding machine-readable instructions. However, once configured, the FPGA circuitry 1000 instantiates the operations and/or functions corresponding to the machine-readable instructions in hardware and, thus, can often execute the operations/functions faster than they could be performed by a general-purpose microprocessor executing the corresponding software.

More specifically, in contrast to the microprocessor 900 of FIG. 9 described above (which is a general purpose device that may be programmed to execute some or all of the machine-readable instructions represented by the flowchart(s) of FIG. 3 but whose interconnections and logic circuitry are fixed once fabricated), the FPGA circuitry 1000 of the example of FIG. 10 includes interconnections and logic circuitry that may be configured, structured, programmed, and/or interconnected in different ways after fabrication to instantiate, for example, some or all of the operations/functions corresponding to the machine-readable instructions represented by the flowchart(s) of FIG. 3. In particular, the FPGA circuitry 1000 may be thought of as an array of logic gates, interconnections, and switches. The switches can be programmed to change how the logic gates are interconnected by the interconnections, effectively forming one or more dedicated logic circuits (unless and until the FPGA circuitry 1000 is reprogrammed). The configured logic circuits enable the logic gates to cooperate in different ways to perform different operations on data received by input circuitry. Those operations may correspond to some or all of the instructions (e.g., the software and/or firmware) represented by the flowchart(s) of FIG. 3. As such, the FPGA circuitry 1000 may be configured and/or structured to effectively instantiate some or all of the operations/functions corresponding to the machine-readable instructions of the flowchart(s) of FIG. 3 as dedicated logic circuits to perform the operations/functions corresponding to those software instructions in a dedicated manner analogous to an ASIC. Therefore, the FPGA circuitry 1000 may perform the operations/functions corresponding to the some or all of the machine-readable instructions of FIG. 3 faster than the general-purpose microprocessor can execute the same.

In the example of FIG. 10, the FPGA circuitry 1000 is configured and/or structured in response to being programmed (and/or reprogrammed one or more times) based on a binary file. In some examples, the binary file may be compiled and/or generated based on instructions in a hardware description language (HDL) such as Lucid, Very High-Speed Integrated Circuits (VHSIC) Hardware Description Language (VHDL), or Verilog. For example, a user (e.g., a human user, a machine user, etc.) may write code or a program corresponding to one or more operations/functions in an HDL; the code/program may be translated into a low-level language as needed; and the code/program (e.g., the code/program in the low-level language) may be converted (e.g., by a compiler, a software application, etc.) into the binary file. In some examples, the FPGA circuitry 1000 of FIG. 10 may access and/or load the binary file to cause the FPGA circuitry 1000 of FIG. 10 to be configured and/or structured to perform the one or more operations/functions. For example, the binary file may be implemented by a bit stream (e.g., one or more computer-readable bits, one or more machine-readable bits, etc.), data (e.g., computer-readable data, machine-readable data, etc.), and/or machine-readable instructions accessible to the FPGA circuitry 1000 of FIG. 10 to cause configuration and/or structuring of the FPGA circuitry 1000 of FIG. 10, or portion(s) thereof.

In some examples, the binary file is compiled, generated, transformed, and/or otherwise output from a uniform software platform utilized to program FPGAs. For example, the uniform software platform may translate first instructions (e.g., code or a program) that correspond to one or more operations/functions in a high-level language (e.g., C, C++, Python, PyTouch, Rust, etc.) into second instructions that correspond to the one or more operations/functions in an HDL. In some such examples, the binary file is compiled, generated, and/or otherwise output from the uniform software platform based on the second instructions. In some examples, the FPGA circuitry 1000 of FIG. 10 may access and/or load the binary file to cause the FPGA circuitry 1000 of FIG. 10 to be configured and/or structured to perform the one or more operations/functions. For example, the binary file may be implemented by a bit stream (e.g., one or more computer-readable bits, one or more machine-readable bits, etc.), data (e.g., computer-readable data, machine-readable data, etc.), and/or machine-readable instructions accessible to the FPGA circuitry 1000 of FIG. 10 to cause configuration and/or structuring of the FPGA circuitry 1000 of FIG. 10, or portion(s) thereof.

The FPGA circuitry 1000 of FIG. 10, includes example input/output (I/O) circuitry 1002 to obtain and/or output data to/from example configuration circuitry 1004 and/or external hardware 1006. For example, the configuration circuitry 1004 may be implemented by interface circuitry that may obtain a binary file, which may be implemented by a bit stream, data, and/or machine-readable instructions, to configure the FPGA circuitry 1000, or portion(s) thereof. In some such examples, the configuration circuitry 1004 may obtain the binary file from a user, a machine (e.g., hardware circuitry (e.g., programmable or dedicated circuitry) that may implement an Artificial Intelligence/Machine Learning (AI/ML) model to generate the binary file), etc., and/or any combination(s) thereof). In some examples, the external hardware 1006 may be implemented by external hardware circuitry. For example, the external hardware 1006 may be implemented by the microprocessor 900 of FIG. 9.

The FPGA circuitry 1000 also includes an array of example logic gate circuitry 1008, a plurality of example configurable interconnections 1010, and example storage circuitry 1012. The logic gate circuitry 1008 and the configurable interconnections 1010 are configurable to instantiate one or more operations/functions that may correspond to at least some of the machine-readable instructions of FIG. 3 and/or other desired operations. The logic gate circuitry 1008 shown in FIG. 10 is fabricated in blocks or groups. Each block includes semiconductor-based electrical structures that may be configured into logic circuits. In some examples, the electrical structures include logic gates (e.g., And gates, Or gates, Nor gates, etc.) that provide basic building blocks for logic circuits. Electrically controllable switches (e.g., transistors) are present within each of the logic gate circuitry 1008 to enable configuration of the electrical structures and/or the logic gates to form circuits to perform desired operations/functions. The logic gate circuitry 1008 may include other electrical structures such as look-up tables (LUTs), registers (e.g., flip-flops or latches), multiplexers, etc.

The configurable interconnections 1010 of the illustrated example are conductive pathways, traces, vias, or the like that may include electrically controllable switches (e.g., transistors) whose state can be changed by programming (e.g., using an HDL instruction language) to activate or deactivate one or more connections between one or more of the logic gate circuitry 1008 to program desired logic circuits.

The storage circuitry 1012 of the illustrated example is structured to store result(s) of the one or more of the operations performed by corresponding logic gates. The storage circuitry 1012 may be implemented by registers or the like. In the illustrated example, the storage circuitry 1012 is distributed amongst the logic gate circuitry 1008 to facilitate access and increase execution speed.

The example FPGA circuitry 1000 of FIG. 10 also includes example dedicated operations circuitry 1014. In this example, the dedicated operations circuitry 1014 includes special purpose circuitry 1016 that may be invoked to implement commonly used functions to avoid the need to program those functions in the field. Examples of such special purpose circuitry 1016 include memory (e.g., DRAM) controller circuitry, PCIe controller circuitry, clock circuitry, transceiver circuitry, memory, and multiplier-accumulator circuitry. Other types of special purpose circuitry may be present. In some examples, the FPGA circuitry 1000 may also include example general purpose programmable circuitry 1018 such as an example CPU 1020 and/or an example DSP 1022. Other general purpose programmable circuitry 1018 may additionally or alternatively be present such as a GPU, an XPU, etc., that can be programmed to perform other operations.

Although FIGS. 9 and 10 illustrate two example implementations of the programmable circuitry 812 of FIG. 8, many other approaches are contemplated. For example, FPGA circuitry may include an on-board CPU, such as one or more of the example CPU 1020 of FIG. 9. Therefore, the programmable circuitry 812 of FIG. 8 may additionally be implemented by combining at least the example microprocessor 900 of FIG. 9 and the example FPGA circuitry 1000 of FIG. 10. In some such hybrid examples, one or more cores 902 of FIG. 9 may execute a first portion of the machine-readable instructions represented by the flowchart(s) of FIG. 3 to perform first operation(s)/function(s), the FPGA circuitry 1000 of FIG. 10 may be configured and/or structured to perform second operation(s)/function(s) corresponding to a second portion of the machine-readable instructions represented by the flowcharts of FIG. 5-7, and/or an ASIC may be configured and/or structured to perform third operation(s)/function(s) corresponding to a third portion of the machine-readable instructions represented by the flowcharts of FIG. 5-7.

It should be understood that some or all of the circuitry of FIGS. 9 and/or 10 may, thus, be instantiated at the same or different times. For example, the same and/or different portion(s) of the microprocessor 900 of FIG. 9 may be programmed to execute portion(s) of machine-readable instructions at the same and/or different times. In some examples, same and/or different portion(s) of the FPGA circuitry 1000 of FIG. 10 may be configured and/or structured to perform operations/functions corresponding to portion(s) of machine-readable instructions at the same and/or different times.

In some examples, some or all of the circuitry of FIGS. 9 and/or 10 may be instantiated, for example, in one or more threads executing concurrently and/or in series. For example, the microprocessor 900 of FIG. 9 may execute machine-readable instructions in one or more threads executing concurrently and/or in series. In some examples, the FPGA circuitry 1000 of FIG. 10 may be configured and/or structured to carry out operations/functions concurrently and/or in series. Moreover, in some examples, some or all of the processor circuitry 812 of FIGS. 9 and/or 10 may be implemented within one or more virtual machines and/or virtual execution environments executing on the microprocessor 900 of FIG. 9.

In some examples, the programmable circuitry 812 of FIG. 8 may be in one or more packages. For example, the microprocessor 900 of FIG. 9 and/or the FPGA circuitry 1000 of FIG. 10 may be in one or more packages. In some examples, an XPU may be implemented by the programmable circuitry 812 of FIGS. 8, which may be in one or more packages. For example, the XPU may include a CPU (e.g., the microprocessor 900 of FIG. 9, the CPU 1020 of FIG. 10, etc.) in one package, a DSP (e.g., the DSP 1022 of FIG. 10) in another package, a GPU in yet another package, and an FPGA (e.g., the FPGA circuitry 1000 of FIG. 10) in still yet another package.

A block diagram illustrating an example software distribution platform 1105 to distribute software such as the example machine-readable instructions 832 of FIG. 8 to other hardware devices (e.g., hardware devices owned and/or operated by third parties from the owner and/or operator of the software distribution platform) is illustrated in FIG. 11. The example software distribution platform 1105 may be implemented by any computer server, data facility, cloud service, etc., capable of storing and transmitting software to other computing devices. The third parties may be customers of the entity owning and/or operating the software distribution platform 1105. For example, the entity that owns and/or operates the software distribution platform 1105 may be a developer, a seller, and/or a licensor of software such as the example machine-readable instructions 832 of FIG. 8. The third parties may be consumers, users, retailers, OEMs, etc., who purchase and/or license the software for use and/or re-sale and/or sub-licensing. In the illustrated example, the software distribution platform 1105 includes one or more servers and one or more storage devices. The storage devices store the machine-readable instructions 832, which may correspond to the example machine-readable instructions of FIG. 3, as described above. The one or more servers of the example software distribution platform 1105 are in communication with an example network 1110, which may correspond to the network 116 of FIG. 1. In some examples, the one or more servers are responsive to requests to transmit the software to a requesting party as part of a commercial transaction. Payment for the delivery, sale, and/or license of the software may be handled by the one or more servers of the software distribution platform and/or by a third-party payment entity. The servers enable purchasers and/or licensors to download the machine-readable instructions 832 from the software distribution platform 1105. For example, the software, which may correspond to the example machine-readable instructions of FIG. 3, may be downloaded to the example programmable circuitry platform 800 which is to execute the machine-readable instructions 832 to implement the processor circuitry 812. In some examples, one or more servers of the software distribution platform 1105 periodically offer, transmit, and/or force updates to the software (e.g., the example machine-readable instructions 832 of FIG. 8) to ensure improvements, patches, updates, etc., are distributed and applied to the software at the end user devices. Although referred to as software above, the distributed "software" could alternatively be firmware.

Example methods, apparatus, systems, and articles of manufacture to manage configuration assets for network devices are disclosed herein. Further examples and combinations thereof include the following: Example 1 includes a non-transitory computer readable medium comprising instructions to cause at least one programmable circuit to generate machine readable code using a model, the machine readable code based on a configuration request and on a network infrastructure, and deploy a program corresponding to the machine readable code to at least one device in the network infrastructure.

Example 2 includes the non-transitory computer readable medium of example 1, wherein the network infrastructure is a first network infrastructure, the instructions are to cause one or more of the at least one programmable circuit to obtain historical data corresponding to devices in a second network infrastructure, and generate the machine readable code using the model based on the historical data.

Example 3 includes the non-transitory computer readable medium of Examples 1-2, wherein the machine readable code is first machine readable code, and the instructions are to cause one or more of the at least one programmable circuit to generate the machine readable code by obtaining a vector from a database based on the configuration request, the vector associated with a function of a network infrastructure device, second machine readable code corresponding to the function, a fitness risk index, and an error index, and inputting the vector to the model.

Example 4 includes the non-transitory computer readable medium of Examples 1-3, wherein the instructions cause one or more of the at least one programmable circuit to retrain the model in response to an update to the database.

Example 5 includes the non-transitory computer readable medium of Examples 1-5, wherein the instructions cause one or more of the at least one programmable circuit to verify the machine readable code generated by the model.

Example 6 includes the non-transitory computer readable medium of Examples 1-5, wherein the instructions cause one or more of the at least one programmable circuit to deploy the first machine readable code to a test environment prior to deploying the machine readable code to the at least one device.

Example 7 includes the non-transitory computer readable medium of Examples 1-6, wherein the model is implemented using an artificial intelligence (AI) engine.

Example 8 includes an apparatus comprising interface circuitry to obtain a configuration request, machine readable instructions, and at least one programmable circuit to at least one of instantiate or execute the machine readable instructions to generate network device configuration assets using a model, the network device configuration assets based on the configuration request and on a network infrastructure, and deploy a program corresponding to the network device configuration assets to at least one device in the network infrastructure.

Example 9 includes the apparatus of example 8, wherein the network infrastructure is a first network infrastructure, one or more of the at least one programmable circuit to obtain historical data corresponding to devices in a second network infrastructure, and generate the network device configuration assets using the model based on the historical data.

Example 10 includes the apparatus of Examples 8-9, wherein the network device configuration assets are first network device configuration assets, and one or more of the at least one programmable circuit is to generate the first network device configuration assets by obtaining a vector from a database based on the configuration request, the vector associated with a function of a network infrastructure device, second network device configuration assets corresponding to the function, a fitness risk index, and an error index, and inputting the vector to the model.

Example 11 includes the apparatus of Examples 8-10, wherein one or more of the at least one programmable circuit is to retrain the model in response to an update to the database.

Example 12 includes the apparatus of Examples 8-11, wherein one or more of the at least one programmable circuit is to verify the network device configuration assets generated by the model.

Example 13 includes the apparatus of Examples 8-12, wherein one or more of the at least one programmable circuit is to deploy the program to a test environment prior to deploying the network device configuration assets to the at least one device.

Example 14 includes the apparatus of Examples 8-13, wherein the model is implemented using an artificial intelligence (AI) engine.

Example 15 includes a method comprising generating, with an artificial intelligence (AI) engine, machine readable code based on a configuration request and on a network infrastructure, and deploying a program corresponding to the machine readable code to at least one device in the network infrastructure.

Example 16 includes the method of example 15, wherein the network infrastructure is a first network infrastructure, and including obtaining historical data corresponding to devices in a second network infrastructure, and generating the machine readable code using the AI engine based on the historical data.

Example 17 includes the method of examples 15-16, wherein the generating of the machine readable code includes obtaining a vector from a database based on the configuration request, the vector associated with a function of a network infrastructure device, second machine readable code corresponding to the function, a fitness risk index, and an error index, and inputting the vector to the AI engine.

Example 18 includes the method of examples 15-17, including retraining the AI engine in response to an update to the database.

Example 19 includes the method of examples 15-18, including verifying the machine readable code generated by the AI engine.

Example 20 includes the method of examples 15-19, including deploying the machine readable code to a test environment prior to deploying the machine readable code to the at least one device.

Example 21 includes a non-transitory computer readable medium comprising instructions to cause at least one programmable circuit to identify groups of deployed network devices based on respective configurations of the network devices and telemetry data associated with respective behavior of the network devices, and generate code to configure a new network device.

Example 22 includes the non-transitory computer readable medium of example 21, wherein the instructions cause one or more of the at least one programmable circuit to, subsequent to addition of the new network device to a network, divide at least one of the groups into two or more groups.

Example 23 includes the non-transitory computer readable medium of examples 21-22, wherein the instructions cause one or more of the at least one programmable circuit to determine a fitness risk index corresponding to actions of the network devices.

Example 24 includes the non-transitory computer readable medium of examples 21-23, wherein the instructions cause one or more of the at least one programmable circuit to determine the fitness risk index based on the telemetry data and capabilities of the network devices.

Example 25 includes the non-transitory computer readable medium of examples 21-24, wherein the instructions cause one or more of the at least one programmable circuit to determine an error index corresponding to the network devices.

Example 26 includes the non-transitory computer readable medium of examples 21-25, wherein the error index is based on at least one of latency, packet loss, retransmission rate, or noise level.

Example 27 includes the non-transitory computer readable medium of examples 21-26, wherein the instructions cause one or more of the at least one programmable circuit to automatically generate code for the new network device based on the fitness risk index and the error index.

Example 28 includes the non-transitory computer readable medium of examples 21-27, wherein the instructions cause one or more of the at least one programmable circuit to train an AI engine to generate the code based on at least one of the fitness risk index or the error index.

Example 29 includes the non-transitory computer readable medium of examples 21-27, wherein the instructions cause one or more of the at least one programmable circuit to generate the code for the new network device by accessing, via a retrieval augmented architecture, (a) a functional tag corresponding to a prompt associated with the new network device and (b) at least one of the fitness risk index corresponding to the functional tag, or the error index corresponding to the functional tag, and applying the functional tag and the at least one of the fitness risk index or the error index to an AI engine to generate the code for the new network device.

From the foregoing, it will be appreciated that example systems, apparatus, articles of manufacture, and methods have been disclosed to manage configuration assets for network devices. Examples disclosed herein utilize AI-based model(s) to generate efficient configuration of IPUs in a network based on historical knowledge of prior IPUs. Additionally, examples disclosed herein monitor deployed network configurations to recommend more efficient configurations. Thus, examples disclosed herein result in network configurations of IPUs with less latency, less retransmission, less packet loss, and/or less noise. Thus, disclosed example systems, apparatus, articles of manufacture, and methods are directed to one or more improvement(s) in the operation of a machine such as a computer or other electronic and/or mechanical device.

Although certain example methods, apparatus and articles of manufacture have been disclosed herein, the scope of coverage of this patent is not limited thereto. On the contrary, this patent covers all methods, apparatus and articles of manufacture fairly falling within the scope of the claims of this patent.

**Claims**

1. An apparatus comprising:

   interface circuitry to obtain a configuration request;
   machine readable instructions; and
   at least one programmable circuit to at least one of instantiate or execute the machine readable instructions to:

   generate network device configuration assets based on a model, the network device configuration assets based on the configuration request and on a network infrastructure; and
   deploy a program corresponding to the network device configuration assets to at least one device in the network infrastructure.

2. The apparatus of claim 1, wherein the network infrastructure is a first network infrastructure, one or more of the at least one programmable circuit to:

   obtain historical data corresponding to devices in a second network infrastructure; and
   generate the network device configuration assets using the model based on the historical data.

3. The apparatus of any one of claims 1-2, wherein one or more of the at least one programmable circuit is to generate the network device configuration assets by:

   obtaining a vector from a database based on the configuration request; and
   inputting the vector to the model.

4. The apparatus of claim 3, wherein one or more of the at least one programmable circuit is to retrain the model in response to an update to the database.

5. The apparatus of any one of claims 3-4, wherein one or more of the at least one programmable circuit is to verify the network device configuration assets generated by the model.

6. The apparatus of any one of claims 3-5, wherein one or more of the at least one programmable circuit is to a test environment prior to deploying the network device configuration assets to the at least one device.

7. The apparatus of any one of claims 3-6, wherein the model is implemented using an artificial intelligence (AI) engine.

8. A method comprising:

   generating, with an artificial intelligence (AI) engine, network infrastructure instructions based on a configuration request and on a network infrastructure; and
   deploying a program corresponding to network infrastructure instructions to at least one device in the network infrastructure.

9. The method of claim 8, wherein the network infrastructure is a first network infrastructure, and including:

   obtaining historical data corresponding to devices in a second network infrastructure; and
   generating the network infrastructure instructions using the AI engine based on the historical data.

10. The method of any one of claims 8-9, wherein the generating of the network infrastructure instructions includes:

    obtaining a vector from a database based on the configuration request; and
    inputting the vector to the AI engine.

11. The method of claim 10, including retraining the AI engine in response to an update to the database.

12. The method of any one of claims 10-11, including verifying the network infrastructure instructions generated by the AI engine.

13. The method of any one of claims 10-12, including deploying the network infrastructure instructions to a test environment prior to deploying the network infrastructure instructions to the at least one device.

14. The method of any one of claims 10-13, including verifying the network infrastructure instructions generated by the AI engine.

15. Machine-readable storage including machine-readable instructions, when executed, to implement a method as claimed in any preceding claim.

100

| NETWORK DEVICE 102a | NETWORK DEVICE 102b | NETWORK DEVICE 102c |
|---|---|---|
| IPU 103a | IPU 103b | IPU 103c |

NETWORK
116

IPU MANAGEMENT CIRCUITRY
104

| IPU KNOWLEDGE GENERATION CIRCUITRY 106 | CONFIGURATION ASSETS GENERATION CIRCUITRY 112 |
|---|---|
| FIRMWARE/ SOFTWARE KNOWLEDGE DATABASE 108 | CLUSTER KNOWLEDGE DATABASE 110 |

FIG. 1

FIG. 2

CONF. INFO
QUERY
TELEMETRY
SUB

202 — INTERFACE CIRCUITRY

204 — CLUSTERING CIRCUITRY

206 — RISK CALCULATION CIRCUITRY

208 — CODE EMBEDDING CIRCUITRY

200 — 106 — INITIAL DEFINITIONS

NODE POLICY | CURRENT FXP SETS | P4 APPLICATIONS | TELEMETRY INFORMATION

NETWORK ENGINEER

{IPU_TYPE, NODE_POLICY, FXP RULE SET, DEFAULT P4 ... {TELEMETRY INFO$^{(1)}$}}

{IPU_TYPE, NODE_POLICY, FXP RULE SET, DEFAULT P4 ... {TELEMETRY INFO$^{(1)}$}}

THEORETICAL FUNCTIONAL TAG        DEVICE BEHAVIOR

PCA, t-SNE, ETC.

[ {CLUSTER 1, INFERRED FUNCTIONAL TAG}...{CLUSTER n, INFERRED FUNCTIONAL TAG}}

110 — CLUSTER KNOWLEDGE DATABASE

{CLUSTER 1, INFERRED FUNCTIONAL TAG, FITNESS RISK, ERROR RISK}
...
{CLUSTER n, INFERRED FUNCTIONAL TAG, FITNESS RISK, ERROR RISK}

108 — FIRMWARE/SOFTWARE KNOWLEDGE DATABASE

{IPU_TYPE, NODE_POLICY, FXP RULE SET, DEFAULT P4, INFERRED FUNCTIONAL TAG, FITNESS TAG, ERROR RISK}
...
{IPU_TYPE, NODE_POLICY, FXP RULE SET, DEFAULT P4, INFERRED FUNCTIONAL TAG, FITNESS TAG, ERROR RISK}
...

**FIG. 3**

**FIG. 4**

EP 4 672 694 A1

START

502

OBTAIN INITIAL DEFINITIONS OF CONFIGURATION STATE OF IPUS

504

CLUSTER AND TAG IPUS BASED ON FUNCTIONALITY USING A CLUSTERING ALGORITHM

506

DETERMINE FITNESS RISK INDEX OF CLUSTERS

508

DETERMINE ERROR INDEX OF CLUSTERS

510

EMBED CLUSTER INFORMATION IN CONJUNCTION WITH INDICES INTO FIRST VECTOR

512

EMBED CLUSTER INFORMATION IN CONJUNCTION WITH INDICES AND CODED LANGUAGE INTO SECOND VECTOR

514

STORE FIRST VECTOR INTO CLUSTER KNOWLEDGE DATABASE

516

STORE SECOND VECTOR INTO FIRMWARE/SOFTWARE KNOWLEDGE DATABASE

END

**FIG. 5**

**FIG. 6**

START

600

OBTAIN IPU CONFIGURATION PROMPT
602

GENERATE QUERY BASED ON IPU CONFIGURATION PROMPT
604

OBTAIN NETWORK ELEMENT CONFIGURATION CHARACTERISTICS FROM FIRMWARE/SOFTWARE KNOWLEDGE DATABASE BASED ON QUERY
606

GENERATE ENRICHED QUERY BASED ON NETWORK ELEMENT CONFIGURATION CHARACTERISTICS
608

GENERATE CODE PROPOSAL CORRESPONDING TO CONFIGURATION ASSET BASED ON ENRICHED QUERY
610

VALIDATE GENERATED CODE
612

DISPLAY VALIDATED CODE TO USER
614

DEPLOY PROGRAM CORRESPONDING TO VALIDATED CODE TO SYSTEM
616

FIRMWARE/SOFTWARE KNOWLEDGE DATABASE UPDATED?
618

NO

YES

FINE TUNE AI-BASED MODELS BASED ON ADDITIONAL VECTOR(S) IN FIRMWARE/SOFTWARE KNOWLEDGE DATABASE
620

END

START

700

OBTAIN CURRENT IPU DEPLOYMENT INFORMATION
702

USE CURRENT IPU DEPLOYMENT INFORMATION AND CLUSTER KNOWLEDGE
DATABASE TO GENERATE RECONFIGURATION ASSETS
704

WILL RECONFIGURATION ASSETS IN
AN INCREASE IN EFFICIENCY WHEN COMPARED TO CURRENT
CONFIGURATION ASSETS?
706

NO

YES

OUTPUT NEW RECONFIGURATION ASSETS TO ADMINISTRATOR
708

START

**FIG. 7**

FIG. 8

**FIG. 9**

**FIG. 10**

SOFTWARE
DISTRIBUTION
PLATFORM ⟋— 1105

INSTR
832

⟋— 1110

NETWORK

PROCESSOR
PLATFORM(S) ⟋— 800

INSTR
832

**FIG. 11**

# EUROPEAN SEARCH REPORT

**Application Number**

EP 25 17 4202

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 11 968 088 B1 (YAN YU [US] ET AL) 23 April 2024 (2024-04-23) * column 2, line 60 - column 3, line 13 * * column 3, line 25 - line 60 * * column 4, line 52 - line 61 * * column 5, line 1 - line 6 * * column 9, line 8 - line 14 * * column 13, line 34 - line 43 * * figure 4 *<br>----- | 1-15 | INV. H04L41/0806 H04L41/0823 H04L41/085 H04L41/16<br><br>ADD. H04L41/0604 H04L41/08 H04L41/14 H04L41/026 |
| A | FUAD AHLAM ET AL: "An Intent-based Networks Framework based on Large Language Models", 2024 IEEE 10TH INTERNATIONAL CONFERENCE ON NETWORK SOFTWARIZATION (NETSOFT), IEEE, 24 June 2024 (2024-06-24), pages 7-12, XP034637332, DOI: 10.1109/NETSOFT60951.2024.10588879 [retrieved on 2024-07-10] * page 12, left-hand column, paragraph 3 * * page 9, right-hand column, paragraph 1 *<br>----- | 6,13 | |

**TECHNICAL FIELDS SEARCHED (IPC)**

H04L

The present search report has been drawn up for all claims

| Place of search | Date of completion of the search | Examiner |
|---|---|---|
| Munich | 6 October 2025 | Ventura Martinez, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 17 4202

This annex lists the patent family members relating to the patent documents cited in the above-mentioned European search report.
The members are as contained in the European Patent Office EDP file on
The European Patent Office is in no way liable for these particulars which are merely given for the purpose of information.

06-10-2025

| Patent document cited in search report | Publication date | Patent family member(s) | Publication date |
|---|---|---|---|
| US 11968088 B1 | 23-04-2024 | US 11968088 B1 | 23-04-2024 |
| | | WO 2024253927 A1 | 12-12-2024 |

EPO FORM P0459